(19) Europäisches Patentamt
European Patent Office
Office européen des brevets

(11) **EP 3 413 203 A1**

(12) **EUROPEAN PATENT APPLICATION**
published in accordance with Art. 153(4) EPC

(43) Date of publication:
**12.12.2018  Bulletin 2018/50**

(51) Int Cl.:
***G06F 12/00*** *(2006.01)*

(21) Application number: **17747420.2**

(86) International application number:
**PCT/JP2017/003474**

(22) Date of filing: **31.01.2017**

(87) International publication number:
**WO 2017/135264 (10.08.2017 Gazette 2017/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.02.2016  JP 2016021198**

(71) Applicant: **NEC Solution Innovators, Ltd.
Koto-ku, Tokyo 136-8627 (JP)**

(72) Inventors:
• **OKAJIMA, Yuzuru**
**Tokyo 136-8627 (JP)**
• **MARUYAMA, Kouichi**
**Tokyo 136-8627 (JP)**

(74) Representative: **Vossius & Partner
Patentanwälte Rechtsanwälte mbB
Siebertstrasse 3
81675 München (DE)**

(54) **INFORMATION PROCESSING DEVICE, INFORMATION PROCESSING METHOD, AND COMPUTER-READABLE RECORDING MEDIUM**

(57)     In a database (200), a sample attribute is set in a table included in the database, the sample attribute being able to be designated as an attribute that indicates an element that constitutes a population, and a hash value is set as the level of the sample attribute in records included in the table in the database, the hash value being calculated from the value of the sample attribute included in the record. An information processing device (100) includes a target sample attribute designation unit (11) that designates a sample attribute based on input data, a sample condition specification unit (12) that specifies a sample condition based on the input data, and a sampling unit (13) that sets a level condition that is to be satisfied by records that are to be included in the sample, acquires records that satisfy the level condition and includes them in the sample. If the sample condition is not satisfied, the sampling unit (13) changes the target level and again acquires records.

Fig.1

**Description**

TECHNICAL FIELD

The present invention relates to an information processing device, an information processing method, and a computer-readable recording medium having recorded thereon a program for realizing the device and the method, and in particular relates to an information processing device, an information processing method, and a computer-readable recording medium for sampling data included in a database.

BACKGROUND ART

A database management system (DMBS) is a system for performing operations on a database in accordance with outside requests, and includes a function for outputting data included in the database. Specifically, the DBMS accepts a query from the outside as input, extracts data that matches conditions designated in the query, and outputs the extracted data. If an aggregation method is designated in the query, the DBMS aggregates the data and outputs the aggregation result.

In recent years, the number of records stored in databases has become large-scale, and it has become difficult to quickly output results. For this reason, it takes a long time to output all of the records from the storage device that holds the database, and the speed of response to the query has become slower.

In order to solve this problem, a method is known in which a sample is created by stochastically acquiring records included in a table. Bernoulli sampling is one representative example. In Bernoulli sampling, a random number is generated for each record in a table, and records are included in the sample if the random number is less than or equal to a threshold value.

In this way, stochastically acquiring records included in the table is equivalent to, in statistical terms, "creating a population that is a set of record as elements, and stochastically selecting records that are elements in the population in order to create a new sample that is a partial set of records as elements".

However, in data analysis, instead of simple sampling in which the elements of a population are individual records, it is necessary to perform complex sampling in which elements of a population correspond to multiple records.

For example, consider the case where a table records customer orders, and each record in this table corresponds to one order. The records each record an identifier of the customer who made the order. Assume that some customers have made many orders, and some customers have made only one order. In this case, a situation occurs in which the identifier of a certain customer appears in multiple records, and the identifier of another customer appears in only one record.

Next, assume that the average number of orders per customer is to be estimated based on the above-described table recording customer orders. At this time, the average number of orders per customer cannot be accurately estimated from a sample created by acquiring records with equal probability, as in Bernoulli sampling. This is because records corresponding to a customer who has made many orders are more likely to be selected, and records corresponding to a customer who has made few orders is less likely to be selected. That is to say, this is because there is bias in the probability of a customer being selected. This is also because only a portion of all of the orders made by the same customer would be included in the sample, and therefore the number of orders per person cannot be known by merely looking at the sample.

In this way, in the case of a sample created by acquiring records with equal probability, such a sample is not considered to be a sample that has elements appearing in multiple records as a population, and statistical characteristics cannot be estimated correctly.

Solving this problem requires a technique by which elements appearing in multiple records are acquired with equal probability. Specifically, instead of acquiring records with equal probability, it is necessary for customers appearing in the table to first be selected with equal probability, and then for all of the records related to the selected customers to be extracted. If the records extracted in this way are grouped according to customer, and then an average value is obtained, it is possible to correctly estimate the average number of orders per customer. This is because the probability of a customer being selected is the same regardless of the number of orders. This is sampling for creating a population that is a set of customers, not a set of records.

Note that Patent Document 1 discloses an example of a technique for performing sampling to create a population that is a set of elements corresponding to multiple records. In the technique disclosed in Patent Document 1, focus is placed on a specific attribute, and a hash value of an attribute value included in each record is calculated while scanning all of the records included in a table in a database. A record is then included in a sample only if the hash value exceeds a threshold value. If the number of records included in the sample becomes too large, a portion of the sample is discarded by changing the threshold value, thus setting the size of the sample to a certain size or smaller.

In this way, according to the technique disclosed in Patent Document 1, all of the records for which the hash value of the attribute value exceeds the threshold value are included in the sample, and therefore it is possible to correctly realize sampling for creating a population that is a set of attribute values, not records. In other words, a situation is realized in which attribute values are selected with equal probability, and all of the records that have the selected attribute value are included in the sample.

LIST OF PRIOR ART DOCUMENTS

PATENT DOCUMENT

Patent Document 1: US 7047230

DISCLOSURE OF THE INVENTION

PROBLEMS TO BE SOLVED BY THE INVENTION

According to the above-described technique disclosed in Patent Document 1, it is possible to realize sampling for creating a population that is a set of elements corresponding to one or more records. However, even if the technique disclosed in Patent Document 1 is used, it is necessary to scan all of the records in the table in order to create the sample, and the creation of the sample is slow.

Patent Document 1 also discloses a technique in which samples are created in advance, and a response to a query is given using the sample that was created at the time when the query was received from the outside. However, with a technique of creating samples in advance, if there is no sample that matches the conditions of the query that was received from the outside, it is not possible to give a response quickly. Furthermore, if various types of samples are prepared in advance in order to be able to respond to various queries, this increases the amount of data that is to be stored, and wastes the storage capacity.

One example of an object of the present invention is to solve the above-described problems and provide an information processing device, an information processing method, and a computer-readable recording medium according to which sampling that matches the conditions of a query can be executed at high speed on a database in which at least one element of a population is associated with multiple records.

MEANS FOR SOLVING THE PROBLEMS

In order to achieve the aforementioned object, an information processing device according to an aspect of the present invention is an information processing device for sampling data included in a database, a sample attribute being set in one or more tables included in the database, the sample attribute being able to be designated as an attribute that indicates an element that constitutes a population, and a hash value being calculated from a value of the sample attribute included in records included in the table in the database, and being set as a level of the sample attribute in the records, the information processing device including:

a target sample attribute designation unit that designates the sample attribute as a target sample attribute based on input data received from outside, the target sample attribute indicating an element that constitutes a population in the sampling;

a sample condition specification unit that specifies, as a sample condition, a condition that is to be satisfied by a sample created by the sampling, based on the input data; and

a sampling unit that

selects, as a target level, a level for determining a record that is to be included in the sample, and sets a level condition with use of the selected target level, the level condition being a condition that is to be satisfied by a record that is to be included in the sample,

acquires, from among the records included in the table, a record in which the level of the target sample attribute satisfies the level condition, and includes the acquired record in the sample, and

determines whether or not the sample satisfies the sample condition, and in a case of determining that the sample condition is not satisfied, changes the target level and again acquires a record.

In order to achieve the aforementioned object, an information processing method according to an aspect of the present invention is an information processing method for sampling data included in a database, the method including: in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

(a) a step of designating the sample attribute as a target sample attribute based on input data received from outside, the target sample attribute indicating an element that constitutes a population in the sampling;
(b) a step of specifying, as a sample condition, a condition that is to be satisfied by a sample created by the sampling, based on the input data; and
(c) a step of
selecting, as a target level, a level for determining a record that is to be included in the sample, and setting a level condition with use of the selected target level, the level condition being a condition that is to be satisfied by a record that is to be included in the sample,
acquiring, from among the records included in the table, a record in which the level of the target sample attribute satisfies the level condition, and includes the acquired record in the sample, and
determining whether or not the sample satisfies the sample condition, and in a case of determining that the sample condition is not satisfied, changing the target level and again acquiring a record.

In order to achieve the aforementioned object, a computer-readable recording medium according to an aspect of the present invention is a computer-readable recording medium having recorded thereon a program that includes instructions to be executed by a computer in order to cause the computer to sample data included in a database, the instructions causing the computer to execute:
in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

(a) a step of designating the sample attribute as a target sample attribute based on input data received from outside, the target sample attribute indicating an element that constitutes a population in the sampling;
(b) a step of specifying, as a sample condition, a condition that is to be satisfied by a sample created by the sampling, based on the input data; and
(c) a step of
selecting, as a target level, a level for determining a record that is to be included in the sample, and setting a level condition with use of the selected target level, the level condition being a condition that is to be satisfied by a record that is to be included in the sample,
acquiring, from among the records included in the table, a record in which the level of the target sample attribute satisfies the level condition, and includes the acquired record in the sample, and
determining whether or not the sample satisfies the sample condition, and in a case of determining that the sample condition is not satisfied, changing the target level and again acquiring a record.

ADVANTAGEOUS EFFECTS OF THE INVENTION

As described above, according to the present invention, sampling that matches the conditions of a query can be executed at high speed on a database in which at least one element of a population is associated with multiple records.

BRIEF DESCRIPTION OF THE DRAWINGS

[FIG. 1] FIG. 1 is a block diagram showing a schematic configuration of an information processing device in an embodiment of the present invention.
[FIG. 2] FIG. 2 is a block diagram showing a specific configuration of the information processing device in the embodiment of the present invention.
[FIG. 3] FIG. 3 is a diagram showing an example of a database that is subjected to aggregation in the embodiment of the present invention.
[FIG. 4] FIG. 4 is a diagram showing an example of input to and output from a hash function used in the embodiment of the present invention.
[FIG. 5] FIG. 5 shows an example of buckets obtained by dividing tables of the database shown in FIG. 3.
[FIG. 6] FIG. 6 shows another example of buckets obtained by dividing tables of the database shown in FIG. 3.
[FIG. 7] FIG. 7 is a flowchart showing operations of the information processing device in the embodiment of the present invention.
[FIG. 8] FIG. 8 is a diagram showing an example of input data used in the embodiment of the present invention.
[FIG. 9] FIG. 9 is a diagram showing an example of a view used in the embodiment of the present invention.
[FIG. 10] FIG. 10 is a diagram showing another example of a view used in the embodiment of the present invention.
[FIG. 11] FIG. 11 is a diagram showing another example of a view used in the embodiment of the present invention.
[FIG. 12] FIG. 12 is a diagram showing another example of a view used in the embodiment of the present invention.
[FIG. 13] FIG. 13 is a diagram showing an example of a sample condition query used in the embodiment of the present invention.
[FIG. 14] FIG. 14 is a diagram showing an example of a query created by an output calculation unit in the embodiment of the present invention.
[FIG. 15] FIG. 15 is a diagram conceptually showing the number of records that are subjected to sampling processing by the information processing device in the embodiment.
[FIG. 16] FIG. 16 is a block diagram showing an example of a computer that realizes the information processing device in the embodiment of the present invention.

MODES FOR CARRYING OUT THE INVENTION

Embodiment

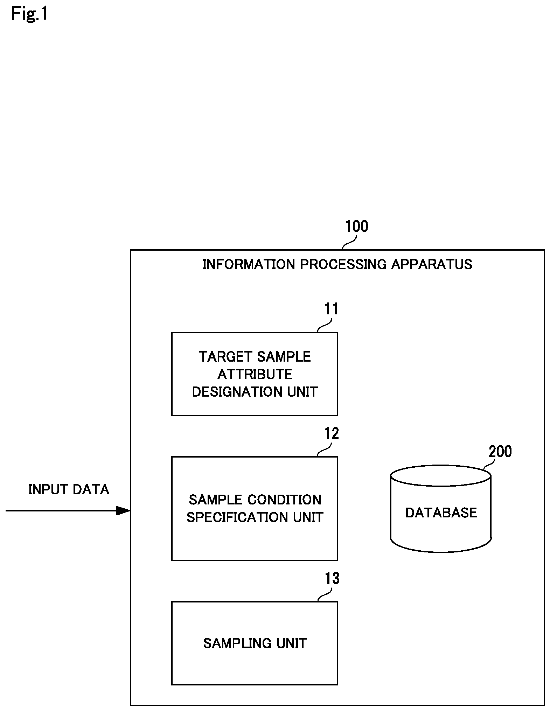

The following describes an information processing device, an information processing method, and a program in an embodiment of the present invention with reference to FIGS. 1 to 16.

Device configuration

First, a schematic configuration of the information processing device in the present embodiment will be described with reference to FIG. 1. FIG. 1 is a block diagram showing the schematic configuration of the information processing device in the embodiment of the present invention.

As shown in FIG. 1, an information processing device 100 is a device for sampling data included in a database 200.

Sample attributes are set in one or more tables included in the database 200, and the sample attributes can be designated as attributes that indicate elements constituting a population. Furthermore, a hash value is set as a sample attribute level in each record included in the table, and the hash value is calculated from the value of the sample attribute included in the corresponding record.

Also, as shown in FIG. 1, the information processing device 100 includes a target sample attribute designation unit 11, a sample condition specification unit 12, and a sampling unit 13.

The target sample attribute designation unit 11 designates, based on input data received from the outside, a target sample attribute that is a sample attribute that can be designated as an attribute that indicates an element that is to constitute a population. The target sample attribute indicates elements that are to constitute the population in sampling.

The sample condition specification unit 12 specifies, based on input data, a sample condition that is a condition that is to be satisfied by the sample created by sampling.

The sampling unit 13 first selects a target level that is a level for determining records that are to be included in the sample, and then sets, using the selected target level, a level condition that is a condition that is to be satisfied by the records that are to be included in the sample. Next, the sampling unit 13 acquires, from the records included in the table, the records that have a target sample attribute level that satisfies the level condition, and includes the acquired records in the sample.

Additionally, the sampling unit 13 determines whether or not the sample satisfies the sample condition, and in the case of determining that the sample condition is not satisfied, the sampling unit 13 changes the target level and again acquires the records.

In this way, in the present embodiment, sample attributes are set in a table, and a sample attribute level is set for each record. Accordingly, when the target sample attribute is designated based on input data, records having a target sample attribute level that satisfies the level condition are retrieved until the sample condition is satisfied, thus obtaining a sufficient sample, and therefore there is no need to check the records that do not satisfy the level condition. In other words, according to the present embodiment, sampling that matches the conditions of the query can be executed at high speed on a database in which at least one element of a population is associated with multiple records.

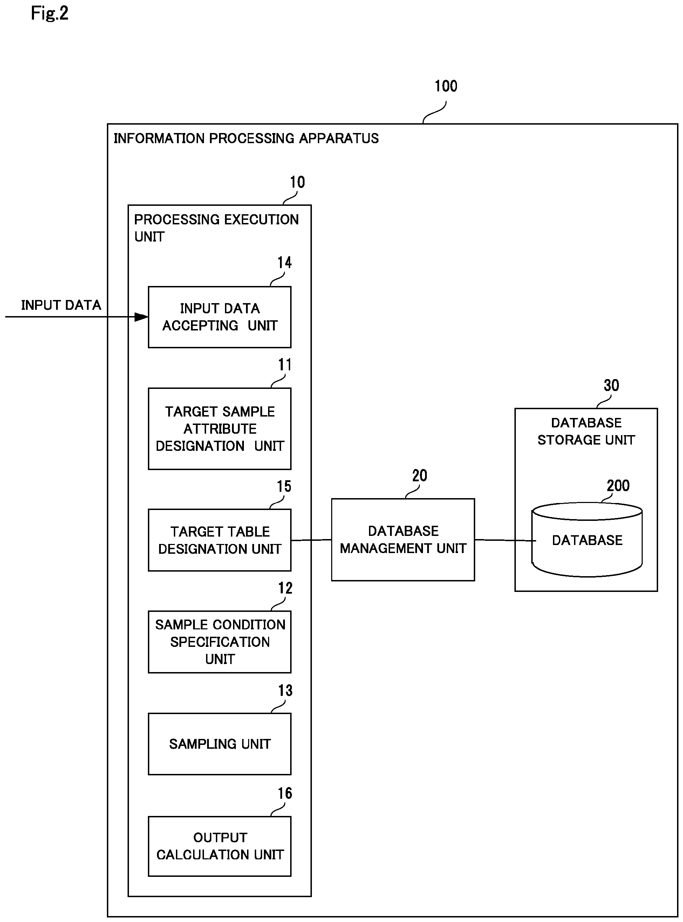

Next, the configuration of the information processing device of the present embodiment will be described in more detail with reference to FIG. 2. FIG. 2 is a block diagram showing a specific configuration of the information processing device in the embodiment of the present invention.

As shown in FIG. 2, in the present embodiment, the information processing device 100 includes a processing execution unit 10, a database management unit 20, and a database storage unit 30. The processing execution unit 10 includes the target sample attribute designation unit 11, the sample condition specification unit 12, and the sampling unit 13 that are described above, and is constructed by these units. The processing execution unit 10 will be described later.

The database storage unit 30 stores the database 200 that is subjected to aggregation. Specifically, the database storage unit 30 is constructed by a storage device such as a hard disk, and the database 200 is stored in a storage region of the storage device. Also, the database 200 is a set of tables, and each table is a set of records.

In the present embodiment, as described above, one or more attributes that can be set as subjects of sampling are set in advance for one or more tables included in the database 200. In the present embodiment, these attributes are referred to as "sample attributes".

One value of a sample attribute indicates one element of a sampling population. Also, the cardinality of the values of a sample attribute is assumed to be sufficiently large enough for use as a sampling population.

In the present embodiment, the same sample attribute may be included in multiple tables included in the database 200. Also, a table that does not include sample attributes may be included in the database.

Furthermore, in the present embodiment, upon receiving input data from the outside, the information processing device 100 selects one of the sample attributes based on the data, and realizes sampling based on a population having the values of the selected sample attribute as the elements. In other words, the values of that sample attribute are randomly selected, records that satisfy the condition designated in the input data are selected from among the records having the selected values, and the selected records are included in a table that indicates the sample.

The values of the sample attribute may be any type of value as long they are values assigned to records. Besides values explicitly recorded in the database as parts of the records, they may be some sort of value that is calculated based on such values. For example, in the case where a record has an attribute A and an attribute B, a value calculated from the attribute A and the attribute B may be used as a sample attribute value.

Each time a record is inserted into the database, a random number independent from the content of the record may be calculated and set as the sample attribute value. In this case, sampling performed using the sample attribute values as elements is equivalent to sampling using the records as elements.

As will be described later, the sample attribute values are used when determining the arrangement of records based on levels calculated from the values. For this reason, as long as the arrangement of records can be determined, it is not required that the sample attribute values themselves are recorded in the database.

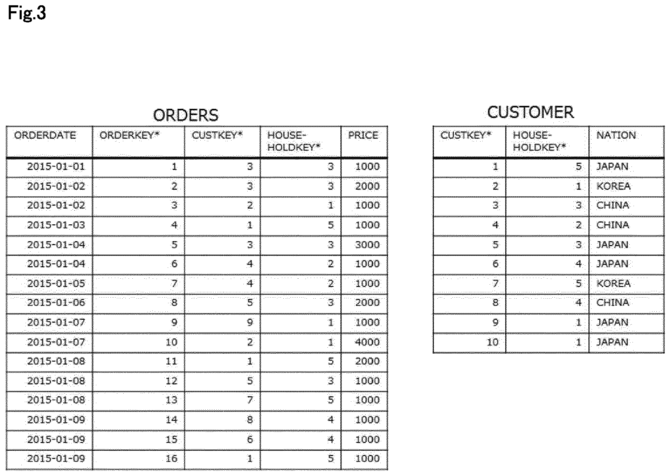

FIG. 3 is a diagram showing an example of a database that is subjected to aggregation in the embodiment of the present invention. In the example in FIG. 3, sample attributes are distinguished from other attributes by adding "*" to sample attributes. In this example, the database includes two tables, namely "ORDERS" and "CUSTOMER". As shown in FIG. 3, ORDERS includes three sample attributes, and CUSTOMER includes two sample attributes. ORDERS is a table that indicates orders. ORDERKEY is an identifier that indicates orders, CUSTKEY is an identifier that indicates customers, and HOUSEHOLDKEY is an identifier that indicates the households to which the customers belong. PRICE indicates the prices that were paid for the corresponding orders. NATION indicates the countries in which the customers live.

For example, the information processing device 100 that stores the database 200 shown in FIG. 3 selects CUSTKEY as the subject of sampling based on external input data, and then performs sampling with use of the customers as the elements of the population. Ten customers from CUSTKEY=1 to CUSTKEY=10 are registered in this database, these ten people are selected with equal probability, and a sample is created from, among the records related to the selected customers, all of the records that satisfy the condition designated in the external input data.

Similarly, if ORDERKEY is selected in the external input data, the information processing device 100 performs sampling with use of orders as the elements of the population, and if HOUSEHOLDKEY is selected, sampling is performed with use of households as the elements of the population.

The two tables ORDERS and CUSTOMER both have the two sample attributes CUSTKEY and HOUSEHOLDKEY However, the sample attribute ORDERKEY is only included in ORDERS. In this way, the same sample attribute may be included in multiple tables, and different sample attributes may be included in different tables.

The database storage unit 30 can divide records included in the tables in the database 200 into smaller sets and handle the smaller sets. In the present embodiment, these smaller sets are referred to as "buckets". All of the records included in a table are assigned to any one of the buckets. These buckets are used in the database storage unit 30 in order to determine a data arrangement.

More specifically, in the present embodiment, records included in the same bucket are arranged near each other. Being arranged near each other means that, for example, the records belonging to the same bucket are arranged in the same block in a hard disk.

As will be described later, the information processing device 100 accepts input data (a query) regarding a table, and sampling and aggregation are executed therein with use of buckets obtained by dividing the records. In the present embodiment, records included in the same bucket are arranged near each other, and therefore processing for acquiring multiple records included in the same bucket is executed at high speed. Higher speed sampling is realized using this feature.

The bucket to which a record is to belong is determined based on the level of one or more sample attributes included in the record. This will be described in more detail below.

The values of a sample attribute are each associated with one level. This level corresponds to the aforementioned "sample attribute level". Also, the sample attribute level may be a hash value that is output when the value of the sample attribute is input into a special hash function.

One example of the hash function is a hash function according to which, in the database 200, the probability of outputting a higher value is exponentially smaller than the probability of outputting a smaller value. As a specific example of the hash function, when the value of a sample attribute is input, one of L integers in the range of [0,L-1] is assigned with the probability shown in Expression 1 below, and the assigned integer is output. L is a constant that designates the number of levels. Also, B is a positive constant in Expression 1 below.

$$\text{Expression 1}$$

$$\forall l \in [0 \dots L - 1]: Pr\{hash(v) = l\} \propto B^{-(l+1)}$$

Also, in the present embodiment, the hash function is set such that the probability of assignment of a value decreases as the level increases. Accordingly, with the probability of assignment of level 0 to a sample attribute value serving as a reference, the probability of assignment of level 1 is 1/B, and the probability of assignment of level 2 is further 1/B of that probability.

Also, the "die-hash" function that is used in Patent Document 1 may be used as the hash function that satisfies the conditions shown in FIG. 1, for example.

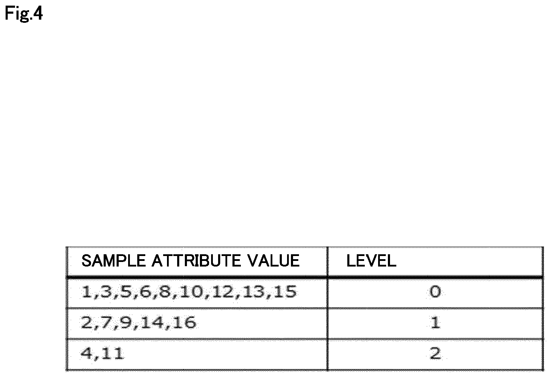

FIG. 4 is a diagram showing an example of input to and output from the hash function used in the embodiment of the present invention. FIG. 4 shows an example in which levels are assigned in the case where L=3 and B=2, and integers from 1 to 16 are input as the sample attribute values. In the example in FIG. 4, the sample attribute values have a higher probability of being assigned a low level, and have a lower probability of being assigned a high level.

Also, although integers are used as the sample attribute in the example in FIG. 4, the sample attribute values may be values other than integers, such as character strings. In this case, the hash function may be a hash function that outputs integers when character strings are input.

Furthermore, different hash functions may be used for different sample attributes. For example, one hash function may be used when calculating levels for CUSTKEY, and a different hash function may be used when calculating levels for ORDERKEY.

It should be noted that in the case of calculating levels for the same sample attribute in multiple tables, it is assumed that the same hash function is used for each table. The reasons for this are as follows. Firstly, in the present embodiment, sampling is performed such that records having the same level are included in the sample. This is also because if the same hash function is used to determine levels in each table, it is guaranteed that records having the same value for the sample attribute in different tables will always be included in the sample.

Also, if multiple sample attributes are included in each record, each of the sample attributes included in each of the records is assigned a level that corresponds to the value of the sample attribute. Here, the term "level array" refers to an array in which the levels that correspond to the values of the sample attributes included in a record are arranged in a certain order. The bucket to which a record is to be assigned is determined based on this level array.

For example, in the third record in the table ORDERS shown in FIG. 3, the sample attributes are "[ORDERKEY, CUSTKEY, HOUSEHOLDKEY] = [3, 2, 1]". In this case, corresponding levels are calculated using the hash function shown in FIG. 4, thus obtaining "[ORDERKEY level, CUSTKEY level, HOUSEHOLDKEY level] = [0, 1, 0]" as the level array. This level array is used to determine the bucket to which this record is to belong.

In the present embodiment, the buckets obtained by dividing a table are prepared in correspondence with the level arrays of the records in the table.

It should be noted that in the present embodiment, it is assumed that when the sum of the levels included in a level array is greater than or equal to a threshold value θ that is determined in advance, that record is assigned to a special bucket called a top bucket. Making this determination has an effect of reducing the number of buckets having a small number of records, and increasing the speed of sampling.

The following is a detailed description of advantages of a top bucket. When the sum of the levels in a level array is large, there is a low probability of a record being assigned to that level array. Accordingly, many buckets having a small number of records are created. If these small buckets are accessed individually, the aggregation speed decreases. However, if these small buckets are grouped into one bucket and accessed together at the same time, a large number of accesses will not be performed, and speed increases. This is an advantage of a top bucket.

One or more attributes in a table may be designated as a cluster attribute for controlling the arrangement of records. In this case, the records included in a bucket are sorted in the order of the cluster attribute. For example, the cluster attribute may be an attribute that indicates the time-series sequence of the record.

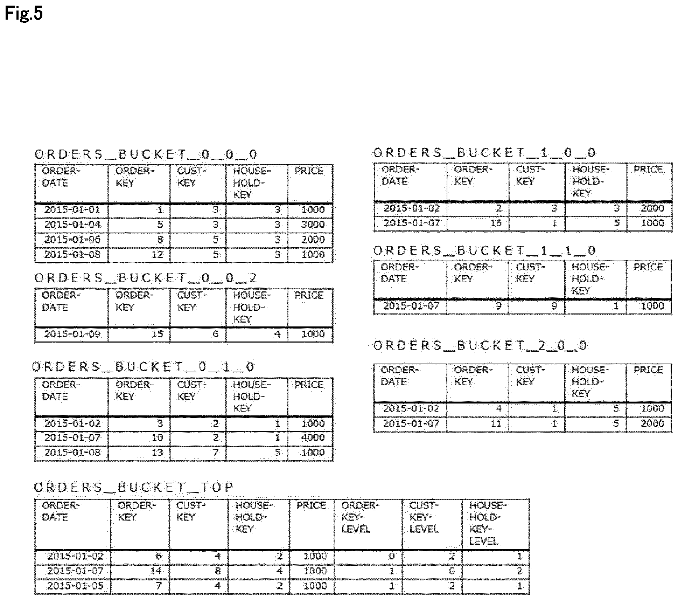

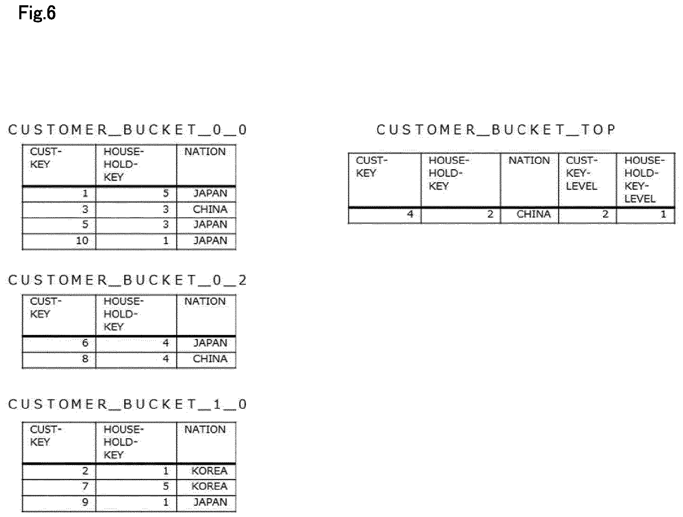

The division of tables into buckets will be described below with reference to FIGS. 3 and 4, and with further use of an example shown in FIG. 5. FIG. 5 shows an example of buckets obtained by dividing the tables of the database shown in FIG. 3. FIG. 6 shows another example of buckets obtained by dividing the tables of the database shown in FIG. 3.

In the examples in FIGS. 5 and 6, L=3 and θ=3. In other words, the level is any one of 0, 1, and 2, and a bucket having a level array sum of 3 or more is stored in a top bucket. The levels are calculated using the hash function shown in FIG. 4.

In FIG. 5, the buckets are each represented as one table. "ORDERS BUCKET_0_0_0" is a bucket obtained by extracting only records with the level array (0,0,0) from ORDERS. The same naming rule is used for the other buckets as well.

"ORDERS BUCKET TOP" is the top bucket obtained from ORDERS. This top bucket includes, as new attributes, ORDERKEYLEVEL indicating the level of ORDERKEY, CUSTKEYLEVEL indicating the level of CUSTKEY, and HOUSEHOLDKEYLEVEL indicating the level of HOUSEHOLDKEY. The records included in the top bucket each have different levels, and therefore an attribute that explicitly indicates the level is added to each record.

FIG. 6 shows an example of CUSTOMER buckets, similarly to ORDERS shown in FIG. 5. CUSTOMER only has two sample attributes, and therefore the length of the level array is 2 values.

The table shown in FIG. 3 is a logical view used when an inquiry is made from the outside to the information processing device 100. On the other hand, the buckets shown in FIGS. 5 and 6 are used for determining the arrangement of records inside the information processing device 100.

As described above, in the database storage unit 30, records included in the same bucket are arranged near each other. Accordingly, records included in the same bucket are acquired at the same time and at high speed. By arranging records in this way, the records included in one bucket can be acquired with a small number of accesses.

In order to realize this closeness, most simply, the records included in the same bucket may be arranged consecutively in the storage region. When the records of a certain bucket are to be acquired, the series of blocks that include the records of that bucket are input and output all together, thus making it possible to acquire the records of the same bucket at the same time.

Also, the records included in one bucket are not necessarily required to be exactly consecutive in the storage region. The records included in one bucket may be stored in a distributed manner in multiple database storage units (storage devices) 30. In order to obtain an effective of an increase in speed, it is sufficient that the records included in one bucket can be accessed all together to a certain extent. Also, although the database storage unit 30 is provided in the information processing device 100 in the example in FIG. 2, in the present embodiment, the database storage unit 30 may be constructed as a server device that is separate from the information processing device 100. In this case, the records included in one bucket are stored in manner of being distributed across multiple servers.

In particular, in the case where a cluster attribute has been defined, it is desirable that records having similar cluster attributes in the same bucket are arranged near each other in the storage region. In this case, all of the records are sorted and arranged consecutively in order of the cluster attribute.

Also, when the table has multiple sample attributes, the individual buckets obtained by dividing the table are not used as independent samples. The reason for this is that records having the same sample attribute value are distributed among multiple buckets. For example, in the example in FIG. 5, orders from the customer indicated by CUSTKEY=3 are distributed among multiple buckets. In other words, each bucket only includes some of the orders from the same customer, and therefore an individual bucket cannot be considered to be a sample from a population having customers as elements. The same follows for the other sample attributes as well, and an individual bucket is not considered to be a proper sample.

As will be described later, in the present embodiment, buckets that correspond to the same level are merged in accordance with a target sample attribute designated based on input data, thus creating a sample table that can be used as a proper sample regarding the target sample attribute. Individual buckets cannot be considered to be samples, but by merging buckets in accordance with a designed target sample attribute, it is possible to create a proper sample regarding the target sample attribute.

In the present embodiment, using the above-described method, the database management unit 20 determines the arrangement of the records in the storage region of the database storage unit 30 based on the levels of a sample attribute included in the records. In other words, the database management unit 20 determines the bucket to which a record is to belong based on the level of a sample attribute included in the record, and arranges records included in the same bucket near each other.

Furthermore, in the database 200, in the case where multiple sample attributes are set, the database management unit 20 obtains a total of the levels of the sample attributes for each record. For each record for which the obtained total does not exceed a threshold value, the database management unit 20 determines the arrangement of that record based on the individual values of the levels of the sample attributes included in that record, and for each record for which the obtained total exceeds the threshold value, the database management unit 20 determines the arrangement of that record based on the total. In other words, records for which the obtained total does not exceed the threshold value are included in buckets other than the top bucket, and records for which the obtained total exceeds the threshold value are included in the top bucket.

Also, the database management unit 20 performs an inquiry with respect to the database 200 recorded in the database storage unit 30. Specifically, the database management unit 20 accepts a query input from the processing execution unit 10, acquires records from the database storage unit 30 and performs calculation, and outputs the calculation result to the processing execution unit 10.

In the present embodiment, it is assumed that the query input to the database management unit 20 from the processing execution unit 10 is written using SQL. However, the scope of the present invention is not limited to SQL. For example, in the present embodiment, the query may be written using a database language that is an independent extension of SQL. Also, an inquiry may be realized by passing a reference to a data structure in a memory.

In the present embodiment, the database storage unit 30 and the database management unit 20 can be realized using an existing DBMS. At this time, the information processing device 100 overall functions as a new DBMS that has an existing DBMS as a backend. This backend DBMS operates as a partial structure of the information processing device 100 for recording records together in groups of buckets. At this time, the processing execution unit 10 operates as an intermediary that accepts input data from the outside, and rewrites the input data as a query for the backend DBMS.

The backend DBMS may record records in any manner as long as records of the same bucket are recorded near each other. For example, one bucket can be realized as one table in the backend DBMS. Using the example shown in FIG. 5, the buckets shown in FIG. 5 would be recorded as tables in the backend DBMS.

Also, multiple buckets may be realized as one table in the backend DBMS. For example, a DBMS that can designate a cluster attribute is used as the backend DBMS, a new attribute for indicating a bucket is added, and when this attribute is registered in the backend DBMS as a cluster attribute, records included in the same bucket are automatically arranged near each other, thus making it possible to realize similar closeness. At this time, records included in the same bucket can be acquired at the same time by designating the attribute that indicates that bucket in the query. If a cluster attribute is set in the source database, that cluster attribute can be used as a secondary cluster attribute in the backend DBMS. Specifically, records are divided into buckets by being sorted according to the attribute that indicates a bucket, and the records that belong the same bucket are sorted according to the cluster attribute in the source database.

In the following description, it is assumed that one bucket is recorded as one table in the backend DBMS.

The following description uses the examples shown in FIGS. 3, 5, and 6. In the present embodiment, it is assumed that the information processing device 100 manages two tables as a DBMS, namely "ORDERS" and "CUSTOMER" show in FIG. 3. Also, the individual buckets shown in FIGS. 5 and 6 are each held as one table in the backend DBMS held inside the information processing device 100.

The backend DBMS may be a DBMS that operates on a single server, or may be a distributed DBMS created by the merging of multiple servers.

The processing execution unit 10 operates as an aggregation device that performs aggregation on records recorded in the database storage unit 30. The processing execution unit 10 accepts input data from the outside, internally generates a new query based on the input data, and transmits the query to the database management unit 20. The database management unit 20 acquires records recorded in the database storage unit 30 based on the query received from the processing execution unit 10, and transmits a query calculation result to the processing execution unit 10. The processing execution unit 10 accepts the query calculation result from the database management unit 20, calculates an input data result, and outputs the calculation result to the outside.

Also, as shown in FIG. 2, in the present embodiment, the processing execution unit 10 includes not only the target sample attribute designation unit 11, the sample condition specification unit 12, and the sampling unit 13, but also an input data accepting unit 14, a target table designation unit 15, and an output calculation unit 16.

The input data accepting unit 14 accepts input data that has been input from the outside, and inputs the accepted input data to the target sample attribute designation unit 11, the sample condition specification unit 12, and the target table designation unit 15.

Based on the input data, the target sample attribute designation unit 11 designates one of the sample attributes as a target sample attribute. For example, assume that the input data includes a query for obtaining "average number of orders per customer". In this case, the target sample attribute designation unit 11 designates the customer key (CUSTKEY) as the target sample attribute.

Also, in the case where multiple sample attributes are set in the database 200, the target sample attribute designation unit 11 can designate one of the sample attributes as the target sample attribute based on the input data.

Based on the input data, the target table designation unit 15 designates, as the target table that is to be the target of sampling, a table in the database 200 that includes the target sample attribute as a sample attribute. In this case, the sampling unit 13 includes the records acquired from the target table in the sample.

As described above, the sample condition specification unit 12 specifies a sample condition that is to be satisfied by the sample, based on the input data. For example, assume that the input data includes a query for obtaining "average number of orders per person based on data of 1000 or more customers". In this case, the sample condition specification unit 12 sets "number of customers included in sample is 1000 or more" as the sample condition.

In the present embodiment, the sampling unit 13 changes the size of the sample until the sample condition is satisfied. Specifically, the sampling unit 13 first selects a target level, and sets a condition that is based on the target level as the level condition. Next, the sampling unit 13 acquires records for which the level of the target sample attribute satisfies the level condition from among the records included in the target table, and sets the acquired records as a portion of the sample.

Next, the sampling unit 13 reads out the records that satisfy the level condition from the storage region of the database storage unit 20, sets the set of those records as the sample table, and determines whether the sample table satisfies the sample condition. This determination is realized as an inquiry made to the database management unit 20.

Further, if the result of the determination is that the sample condition is not satisfied, the sampling unit 13 changes the target level and makes an inquiry to the database management unit 20 until the sample table satisfies the sample condition, or until the target level reaches 0. On the other hand, if the sample condition is satisfied, the sampling unit 13 notifies the output calculation unit 16 that the sample condition was satisfied.

For example, the sampling unit 13 can set, as the level condition, the condition that the level of the target sample attribute is greater than a target level. In this case, the sampling unit 13 acquires records for which the level of the target sample attribute is greater than the target level, and includes these records in the sample. Also, if the result of the determination is that the sample condition is not satisfied, the sampling unit 13 changes the target level to a smaller value, acquires records again, and includes those records in the sample.

If the sample condition is satisfied, the output calculation unit 16 calculates output content with respect to the input data with use of the set of records that satisfy the level condition and the sample condition and were included in the sample. The output calculation unit 16 then outputs the output content to the outside.

Device operation

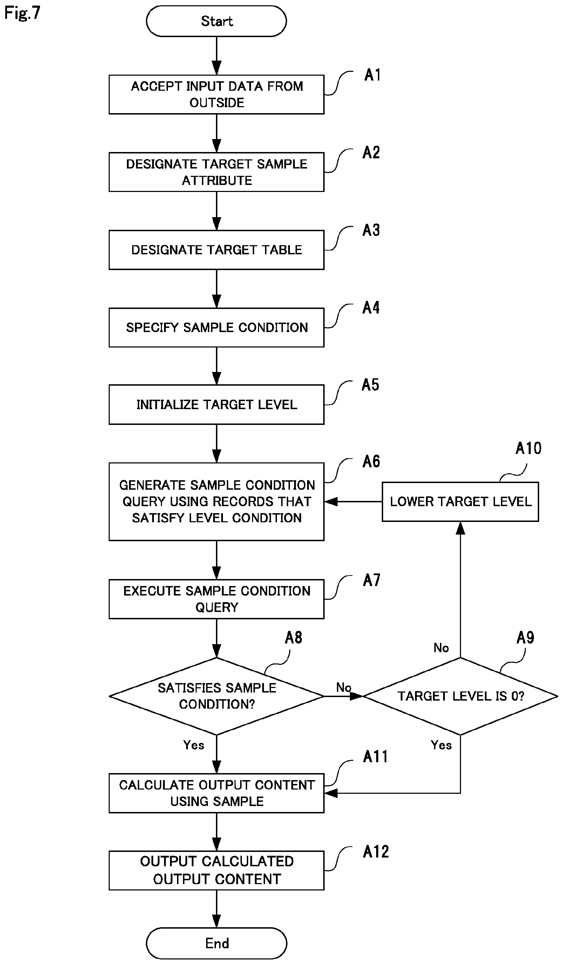

Next, operations of the information processing device 100 in this embodiment of the present invention will be described with reference to FIGS. 7 to 15. FIG. 7 is a flowchart showing operations of the information processing device in this embodiment of the present invention. The following descriptions also references FIGS. 1 to 6 as necessary. Also, in the present embodiment, the information processing method is implemented by causing the information processing device 100 to operate. Accordingly, the following description of operations of the information processing device 100 will substitute for a description of the information processing method of the present embodiment.

As shown in FIG. 7, first, the input data accepting unit 14 accepts input data that has been input from the outside (step A1).

In the present embodiment, the input data is data that designates a sampling method. The input data can include, for example, a designation of a target sample attribute that is to be the subject of sampling, a designation of a target table that is to be the subject of sampling, and a designation of a sample condition that is to be satisfied by the sample. At this time, based on the designated target sample attribute, the information processing device 100 carries out sampling of the designated target table until the sample condition is satisfied.

The input data may be text data that is written in a database language, for example. In this case, the text may be written using a language that is an extension of SQL, or may be written using an independent database language.

Also, the input data is not limited to being text data that is written using a database language, and may be any data as long as it can specify a sampling method. For example, in the case where a list of names of sample attributes is displayed in a web application, when a user selects a specific name using a mouse or the like, the selected name is designated as the target sample attribute. At this time, data specifying the designated target sample attribute is received from the web application as the input data.

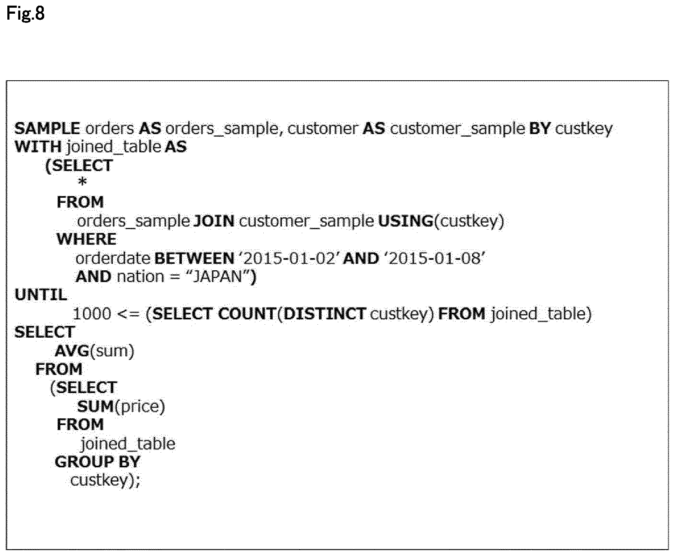

FIG. 8 is a diagram showing an example of input data used in this embodiment of the present invention. The input data shown in FIG. 8 is text data written using a database language that is an extension of SQL. In the example in FIG. 8, a new SAMPLE clause and a new UNTIL clause are added to the clauses that exist in conventional SQL. The SAMPLE clause and the UNTIL clause were independently designed in order to designate the sampling method.

The SAMPLE clause is a clause for designating a target sample attribute and a target table. In the example in FIG. 8, the SAMPLE clause designates CUSTKEY as the target sample attribute. The SAMPLE clause also designates ORDERS and CUSTOMER as target tables. Furthermore, with use of an AS clause, the SAMPLE clause assigns the name ORDERS_SAMPLE to the sample table obtained from ORDERS, and assigns the name CUSTMER SAMPLE to the table obtained from the CUSTOMER.

The WITH clause is a clause that exists in conventional SQL, and has a function of assigning a name to a subquery. According to the subquery defined in the example in FIG. 8, ORDERS SAMPLE and CUSTOMER SAMPLE, which are defined in the SAMPLE clause, are equi-joined based on CUSTKEY and filtered with the WHERE clause, and this subquery is given the name JOINED_TABLE.

The UNTIL clause is a clause for designating the sample condition that is to be satisfied by the sample. The sample table defined in the SAMPLE clause expands little-by-little as sampling proceeds. When the sample condition defined in the UNTIL clause is satisfied, sampling is stopped, and the subsequent SELECT clause is executed using the sample table.

The sample condition designated in the example in FIG. 8 is the condition that the cardinality of CUSTKEY included in the JOINED TABLE defined in the WITH clause is 1000 or more. In other words, this means that sampling is stopped when the JOINED TABLE includes records for 1000 or more customers, and then aggregation from the subsequent SELECT AVG (sum) is executed.

To summarize the above description, the external input data shown in FIG. 8 signifies aggregation according to which "1000 customers who live in Japan and made orders between 2015-01-02 and 2015-01-08 are sampled, the total amount of money spent is calculated for each person, and then the average of the totals is obtained and output".

The aggregation represented by the query shown in FIG. 8 is an example of aggregation that is difficult to calculate when using conventional sampling in which records are selected randomly. The reason for this is that in order to calculate the total amount of money spent by each person in the period, it is necessary for the sample table to include all of the records that correspond to orders made in the period by a randomly selected customer. In the present embodiment, this type of query can be calculated at high speed.

Note that the sample condition is not required to be included in the input data that is input in step A1. As will be described later, the condition to be satisfied by the sample is needed in step A5, and therefore may be input again in step A5.

Next, the target sample attribute designation unit 11 designates a target sample attribute that is to be the subject of sampling, based on the input data from the outside (step A2). This target sample attribute is selected from among one or more sample attributes that have been used for determining the arrangement of records in the database storage unit 30. In the example in FIG. 8, the target sample attribute designation unit 11 designates CUSTKEY as the target sample attribute.

Next, the target table designation unit 15 designates a target table that is to be the subject of sampling, based on the input data from the outside (step A3). This target table is selected from among the tables that include the target sample attribute designated by the target sample attribute designation unit 11. In the example in FIG. 8, the target table designation unit 15 designates ORDERS and CUSTOMER as target tables.

Next, based on the input data from the outside, the sample condition specification unit 12 specifies a sample condition that is to be satisfied by the sample (step A4). In the example in FIG. 8, the sample condition specification unit 12 specifies, as the sample condition, the condition that the expression designated in the UNTIL clause returns TRUE.

In steps A2 to A4 above, information not explicitly designated in the input data from the outside may be obtained by estimation. For example, if the target table is not explicitly designated, the target table designation unit 15 may deem that the target tables are all of the tables that include the target sample attribute. Also, in the same case, a configuration is possible in which the target table designation unit 15 deems that the target tables are the tables in the SQL included in the input data from the outside, and the target sample attribute designation unit 11 deems that the target sample attribute is a sample attribute that is shared by all of those tables.

Next, the sampling unit 13 initializes the target level (step A5).

In the present embodiment, the levels of the target sample attribute of the records are compared with the current target level, and only records that satisfy a certain condition are sampled. This condition is the "level condition".

The target level is a variable for controlling the size of the sample by changing the target level. The higher the target level is, the smaller the number of records that are acquired is, and the lower the target level is, the larger the number of records that are acquired is. The target level may simply be designated to the highest level value. As will be described later, if the number of records acquired with the set target level is too small, the target level is lowered, and then various processing is executed again.

If the sample size can be changed by changing the target level, the level condition may be set to any value. The level condition may be the condition that the level of the target sample attribute of the record is greater than or equal to the target level as described above, or the level condition may be the condition that the level of the target sample attribute of the record is equal to the target level. Hereinafter, it is assumed that the level condition is the condition that the level of the target sample attribute of the record is greater than or equal to the target level.

Next, based on the target sample attribute, the target tables, and the target level, the sampling unit 13 generates a sample condition query with use of the records that satisfy the level condition (step A6). The sample condition query is used for determining whether or not the sample condition is satisfied in a later-described step.

The records that satisfy the level condition that the level of the target sample attribute is greater than or equal to the target level are always included in either a bucket in which the levels of the target sample attribute are greater than or equal to the target level, or a top bucket. Accordingly, the sample condition query is set such that records are acquired from only such buckets.

More specifically, first, for each target table, the sampling unit 13 defines a view for acquiring records from buckets that include records with the target level or higher. This view represents sample tables. The sampling unit 13 then defines the sample condition query such that records are acquired from these sample tables.

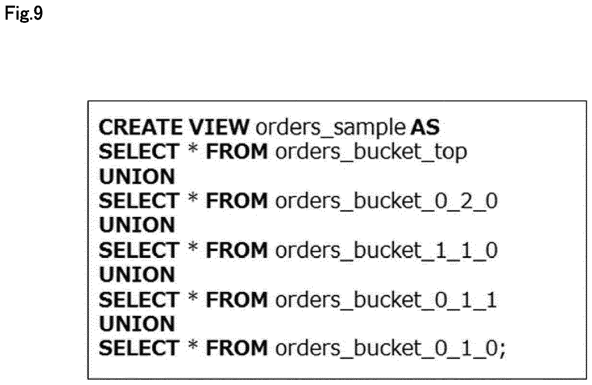

FIG. 9 is a diagram showing an example of a view used in this embodiment of the present invention. Specifically, FIG. 9 shows an example of an SQL statement that defines an ORDERS sample table as the view. In the example in FIG. 9, the sample table is defined using the buckets shown in FIG. 5. Also, in the example in FIG. 9, L=3, 0=3, and the target level is 1. The level array in the ORDERS table is an array of levels in the order of [ORDERKEY level, CUSTKEY level, HOUSEHOLDKEY level].

At this time, there are four level arrays in which a CUSTKEY level is 1 or more, and furthermore the sum of the levels is less than 3, namely [0,2,0], [1,1,0], [0,1,1], and [0,1,0]. It is also necessary to acquire records from the top bucket as well. The tables representing the buckets that have these level arrays are united by a UNION clause, thus creating a view in which all of the records having a CUSTKEY level of 1 or more are selected from ORDERS.

It should be noted that the top bucket also includes records having a level that is below the target level, and therefore an innovation is needed in order to exclude such records. To realize this, for example, the sampling unit 13 creates a view by acquiring, from the top bucket, only the records in which the level of the target sample attribute is greater than or equal to the target level, and then acquires records from that view. Also, the sampling unit 13 can exclude the records having a level lower than the target level by explicitly recording the sample attribute level as an attribute of the record in the top bucket, and then performing filtering on the view using a WHERE clause.

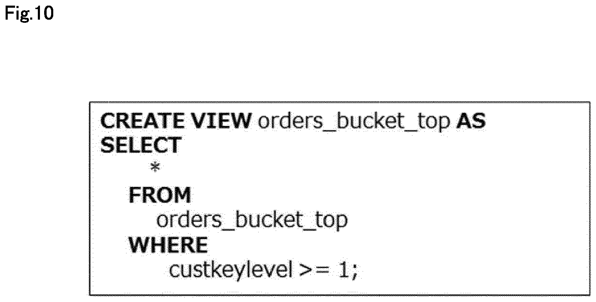

FIG. 10 is a diagram showing another example of a view used in this embodiment of the present invention. Specifically, FIG. 10 shows an example of an SQL statement for creating a view by acquiring, from the ORDERS top bucket, only the records in which the level of the target sample attribute is greater than or equal to the target level. CUSTKEYLEVEL is an attribute storing the level of CUSTKEY. In this SQL statement, the target level is 1, and only the records having a CUSTKEY of 1 or more are acquired from the top bucket. By substituting ORDERS BUCKET TOP defined in FIG. 10 as ORDERS_BUCKET_TOP shown in FIG. 9, only the records in which the level of the target sample attribute is greater than or equal to the target level are acquired.

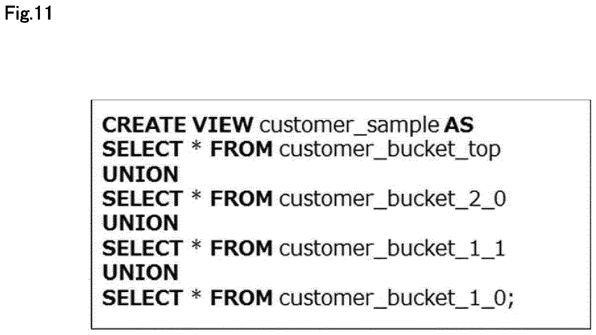

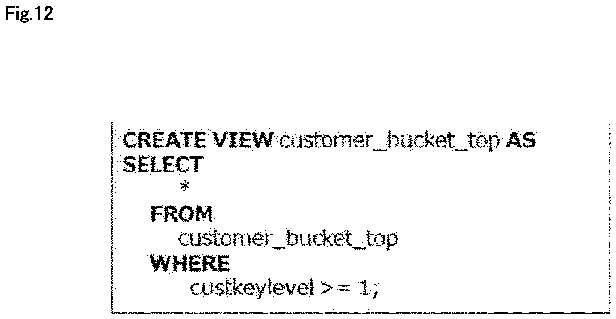

FIGS. 11 and 12 are also diagrams showing other examples of views used in this embodiment of the present invention. Specifically, FIG. 11 shows an example of an SQL statement that defines a CUSTOMER sample table as the view. FIG.12 shows an example of an SQL statement for creating a view by acquiring, from the CUSTOMER top bucket, only the records in which the level of the target sample attribute is greater than or equal to the target level.

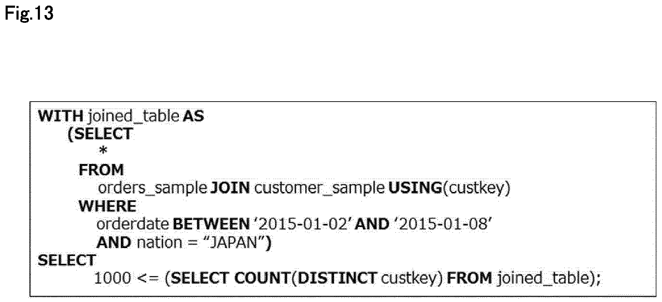

FIG. 13 is a diagram showing an example of a sample condition query used in this embodiment of the present invention. Specifically, FIG. 13 shows an example of an SQL statement for determining whether or not the sample condition is satisfied. The SQL statement shown in FIG. 13 is used as the sample condition query. Also, in the SQL statement shown in FIG. 13, whether or not the sample condition is satisfied is determined with use of the sample tables defined in FIGS. 9 and 11. The SQL statement shown in FIG. 13 is generated by extracting the WITH clause and the UNTIL clause from the extended SQL statement shown in FIG. 8, and replacing UNTIL with SELECT. When the SQL statement shown in FIG. 13 is executed, a Boolean value is output. If the Boolean value is TRUE, this indicates the sample condition was satisfied, and if FALSE, this indicates that the sample condition has not yet been satisfied.

A "CREATE VIEW" statement is used in the SQL statements shown in FIGS. 9 to 13. This is an innovation for performing calculation in a later-described step without directly storing the sample table in the database. Note that in the present embodiment, the sampling unit 13 used the "CREATE TABLE" statement to be able to temporarily store the sample table in the database.

Also, in the present embodiment, the SQL statements shown in FIGS. 9 to 13 are examples, and the configuration of the sample condition query is not limited to these examples. The sample condition query may have a query structure that corresponds to the table structure of the internal DBMS. For example, FIGS. 9 to 13 show a method used in the case where buckets are stored as individual tables in the backend DBMS. However, in the present embodiment, in the case where multiple buckets are stored as one table in the backend DBMS, a configuration is possible in which the levels of the sample attributes in a record are given as a new attribute, and a view is created using the condition that that level is greater than or equal to the target level. In this case as well, a query that obtains a result similar to that of the examples in FIGS. 9 to 13 is realized.

Next, the sampling unit 13 executes the sample condition query, and determines whether or not the sample satisfies the sample condition (step A7). Specifically, the sampling unit 13 inputs the sample condition query to the database management unit 20, and uses the Boolean value returned by the database management unit 20 to determine whether or not the sample satisfies the sample condition. The database management unit 20 also calculates the output of the sample condition query using the data stored in the database storage unit 30.

If the result of the determination in step A7 is that the sample does not satisfy the sample condition, the sampling unit 13 proceeds to step A9, and if the sample satisfies the sample condition, it proceeds to step A11 (step A8).

If the sample does not satisfy the sample condition in step A8, the sampling unit 13 determines whether or not the target level is 0 (zero) (step A9). The sampling unit 13 proceeds to step A11 if the target level is 0 (zero), and proceeds to step A10 if the target level is not 0 (zero).

In step A10, the sampling unit 13 lowers the target level, and then returns to step A6 (step A10). Simply, the sampling unit 13 lowers the target level by "1". Lowering the target level by "1" means that the expected value of the increase in the number of records acquired in step A6 is multiplied by a factor of B. The reason for this is that it can be expected that the new target level includes B times the number of records corresponding to the previous target level. Accordingly, the number of acquired records increases each time step A6 is executed. The generation of the sample is repeated until the sample condition is satisfied, or until the target level reaches 0. Note that in the case where the sampling unit 13 infers that the sample condition will not be satisfied by lowering the target level by "1", it can lower the target level by "2" or more.

If the sample satisfies the sample condition in step A8, or if the target level reaches 0 in step A9, the output calculation unit 16 calculates output content with use of the sample (step A11).

Also, in step A11, the sample condition has not been satisfied if the target level is 0, but all of the records have been obtained from the source table, and therefore the output calculation unit 16 calculates output using those records. In this case, an exact result using all of the data that corresponds to the query is output instead of a sample. The output calculation unit 16 may output an error in the case where the sample condition is not satisfied.

The calculation of the output content by the output calculation unit 16 can be realized by giving a query to the database management unit 20. The query for calculating the output content can be written using SQL, for example.

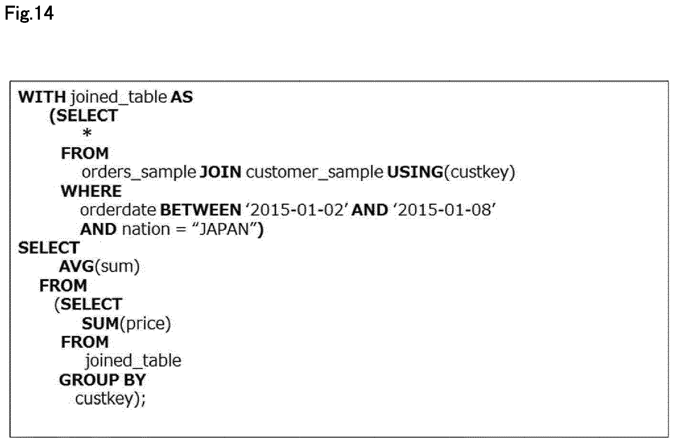

FIG. 14 is a diagram showing an example of a query created by the output calculation unit in this embodiment of the present invention. Specifically, FIG. 14 shows an example of an SQL statement for calculating output content with use of a sample. The SQL statement shown in FIG. 14 is obtained by removing the SAMPLE clause and the UNTIL clause from the input data shown in FIG. 8. The sample table already satisfies the condition described in the UNTIL clause. For this reason, if the SQL statement shown in FIG. 14 is subsequently executed, it is possible to realize aggregation according to the designations made in the external input data.

Also, in the present embodiment, a configuration is possible in which the records used in the sample condition determination are separately cashed in the processing execution unit 10, and the output calculation unit 16 calculates the output content with use of the cashed records. In this configuration, it is possible to omit the inquiry made to the database management unit 20 by the output calculation unit 16.

Then, after the execution of step A11, the output calculation unit 16 outputs the calculated output content to the outside (step A12). In the present embodiment, the calculation result is output after the sample satisfies the condition, but the present embodiment is not limited to this. As a variation, a configuration of the present embodiment is possible in which the output calculation unit 16 outputs content for each target level.

Specifically, content when the target level is L-1 and content when the target level is L-2 are output in the stated order. In this configuration, low-precision estimation results that are based on a small number of samples are displayed at first, and then the number of samples successively increases, and estimation results with successively higher precision are displayed.

Accordingly, operations similar to online aggregation may be realized, that is to say, an outside user monitors the current progress, and the user ends the sampling by inputting a command upon determining that sufficient information has been obtained. In this case, the input of a command from the user is the sampling stop condition.

Effects of embodiment

The following describes effects of the present embodiment.

The technique disclosed in Patent Document 1 described above is technology for scanning all of the records of a table and keeping the size of the sample within a given size by discarding portions of the sample in accordance with levels calculated using a hash function. With this technique, the creation of the sample is time-consuming, and therefore a sample that satisfies a condition designated by input from the outside cannot be created at high speed.

Furthermore, Patent Document 1 discloses a method in which a sample is created in advance, and a query is applied to that sample, but with this method, it is difficult to satisfy a condition designated by input from the outside. For example, when there is a request for sampling 1000 customers who live in a specific country and made orders in a specific time period as with the query shown in FIG. 8, it is not necessarily the case that a sample created in advance will include a sufficient number of customers who satisfy this complex condition. Besides, creating a large number of samples envisioning various conditions wastes an enormous amount of the storage region.

In the present embodiment, records are arranged in advance according to levels calculated using a hash function. When a sample is then requested from the outside, checking begins with priority on records in which the level of a target sample attribute is high, and sampling is ended when a sufficient number of records that satisfy the designated condition have been collected. At this time, records in which the level of the target sample attribute is low are not checked. A majority of the records can therefore be ignored, and the sample is thus generated at high speed. Moreover, unlike the case where a sample is created in advance, a sample that satisfies a condition designated from the outside is created. Furthermore, in the present embodiment, data that originally exists is merely rearranged, and there is no need to duplicate records, and therefore the storage region is not wasted.

The present embodiment is particularly effective in the case where one table has multiple sample attributes. With the method of creating a sample in advance, different samples need to be created and stored according to the attributes that are to be used in sampling, and therefore the greater the number of attributes used in sampling is, the greater the amount of wasted storage region is. In contrast, in the present embodiment, even if the number of sample attributes increases, the arrangement of the records merely changes, and there is no need to duplicate records. The wasting of the storage region is therefore suppressed.

Also, even if a table has only one sample attribute, by using a method of assigning a random sequence to the values of the sample attribute and sorting the records according to that sequence, it is possible to sample the values of that sample attribute by performing sequential access from the head of the table. For example, in the case of the ORDER table shown in FIG. 3, by determining a random sequence for CUSTKEY, and sorting the ORDER table according to that sequence, it is possible to perform sampling with customers as the population by performing sequential access beginning at the head. It should be noted that this simple technique cannot handle multiple sample attributes. For example, if sorting is performed in order to perform sampling by customer, it is not possible to then performing sampling by household.

To address this, in the present embodiment, exponentially biased levels are calculated for multiple sample attributes, and a table is divided in buckets in accordance with combinations of levels, thus making it possible to create a sample at high speed for any of the sample attributes. Letting N be the number of records, the number of levels of exponential division can be suppressed to $L=O (\log N)$ as will be described later, and it is possible to prevent an explosive increase in the number level combinations. Accordingly, regardless of which sample attribute is the target when performing sampling, it is possible to create a sample that satisfies the condition by merely checking a small number of buckets.

Also, in the present embodiment, the target table designation unit 15 can designate, as the target table, two or more tables in which the same target sample attribute is set as a sample attribute. In this case, the sampling unit 13 joins the records acquired from the two or more designated tables based on the same target sample attribute, includes the records generated by the joining in the sample, and determines whether or not the sample condition is satisfied.

In other words, the present embodiment is particularly effective when multiple tables have the same sample attribute, and tables are equi-joined with the condition that the values of the sample attribute are equivalent. The reason for this is that by sampling multiple tables using that attribute, small sample tables are extracted from the respective tables, and equi-joining the sample tables makes it possible to significantly reduce the calculation cost. Joining small tables has a smaller calculation cost than joining large tables.

In the case of conventional sampling in which records are the elements of the population, even if samples obtained from different tables are equi-joined, it is not possible to obtain an accurate estimation result. The reason for this is that in order to perform equi-joining, the same value of the attribute used in equi-joining needs to be included in each of the samples. With sampling in which records are the elements of the population, there is no guarantee that the same value will be included each sample.

However, in the present embodiment, if the sample attribute is the same, the level has been determined using the same hash function. Accordingly, when records are extracted using a certain target level, even in the case of different tables, the same sample attribute value will be included in both samples. It is therefore possible to accurately realize the equi-joining of samples.

Also, in the present embodiment, a table obtained by equi-joining samples is used when determining whether or not the sample condition is satisfied, and sample creation can be continued until the sample condition is satisfied. Accordingly, a sample that satisfies a condition for multiple tables can be created at high speed.

The aforementioned point will be described below using the example of the data database shown in FIG. 3. Assume that the target sample attribute is CUSTKEY, and that ORDERS and CUSTOMER are subjected to sampling. At this time, if records having CUSTKEY=9 are sampled from ORDERS for example, records having CUSTKEY=9 included in CUSTOMER will also certainly be sampled. The reason for this is that records are acquired using levels that were calculated using the same hash function. In this way, records having a selected CUSTKEY value are acquired from both of the tables, and the sample tables can be equi-joined using CUSTKEY.

In the example shown in FIG. 8, the sample condition is described using a condition regarding such a table obtained by joining samples. Specifically, by joining a sample table acquired from ORDERS and a sample table acquired from CUSTOMER, only customers who made orders in the specific time period and furthermore live in a specific country are acquired. In this way, in the present embodiment, a sample that satisfies a condition for multiple tables can be created at high speed.

The present embodiment is particularly important when a database is used in a data warehouse application such as a star schema. In a data warehouse application, a large fact table and multiple dimension tables exist, and aggregation is performed by joining the fact table and the dimension tables with use of a foreign key. The dimension tables indicate dimensions that serve as aggregation criteria, such as customer and product.

In order for aggregation in such a data warehouse to be approximated with sampling, it is necessary to perform sampling with different populations according to the type of aggregation, such as aggregation on a customer basis or aggregation on a product basis. In the present embodiment, in such a scene where various types of aggregation are performed with different populations, by designating "customer" and "product" as sample attributes in advance, it is possible to carry out sampling at high speed with any population.

For example, in the example shown in FIG. 8, by designating CUSTKEY as the target sample attribute, the average of the total amount of money spent per person is calculated for 1000 customers. Here, if CUSTKEY is changed to HOUSEHOLDKEY, it is possible to calculate the average of the total amount of money spent per household for 1000 households. In this way, it is possible to perform sampling on various populations at high speed without creating samples in advance.

Also, the present embodiment is particularly important when a cluster attribute has been set in tables in a database. In this case, when determining the arrangement of records in the storage region in the database storage unit 30, the database management unit 20 can use the values of the cluster attribute as the basis for determining the arrangement of multiple records that are included in a table and have the same sample attribute level.

In other words, in this case, even records included in a bucket are sorted and arranged using the same cluster attribute as the cluster attribute that was set in the original table. Accordingly, if sampling is executed using the cluster attribute as a condition, records not satisfying the cluster attribute condition can be collectively ignored, thus obtaining an effect of being able to collect samples at high speed.

For example, in the example shown in FIG. 3, the ORDERS table, which is the source, is sorted using ORDERDATE, which is an attribute indicating the order date and time, as the cluster attribute. In the examples shown in FIGS. 5 and 6, the records included in the buckets of the ORDERS table have likewise been sorted in order of order date/time. Accordingly, when performing sampling with use of the order date/time as the condition, records satisfying the condition can be acquired all together. For example, in the example shown in FIG. 8, the query is based on the condition of "order that was made between January 2, 2015 and January 8, 2015". When this query is input, in the present embodiment, the records included in the designated time range can be acquired all together, and the records not included in the designated time range can be collectively ignored, thus making it possible to efficiently collect records that satisfy the condition.

Lastly, with respect to high-speed execution in the present embodiment, the following is a specific examination of why execution at high speed is possible.

Consider the case of performing sampling on an order table having N records. Also, each customer corresponds to a constant number of orders greater than or equal to 1, and let the number of customers be $O(N)$.

At this time, the number of levels L is determined such that $L=O(\log(N))$. The log base is B. At this time, for a certain sample attribute, the expected number of attribute values assigned to L-1, which is the highest level, is a constant number of orders regardless of N. The reason for this is that, compared to the probability of being assigned the level 0, the probability of being assigned the level L-1 is 1 over B to the power of L, that is to say 1 over $O(N)$.

At this time, assume that there is a request to sample orders made by M people, according to the external input data. Note that it is assumed that according to the condition designated in the external input data, only records for 1 out of F people will be included in the sample.

Furthermore, at this time, in the present embodiment, searching is performed in order of records having the highest level, and when orders from M or more people have been obtained, sampling is stopped, and the target level is fixed. Let K be the number of levels higher than or equal to the target level at this time. Here, records corresponding to $O(F \cdot M)$ people are included for the K levels higher than or equal to the target level.

If N is sufficiently large, the number of records that are processed in the present embodiment is not dependent on the overall number of records N. No matter how enormous N is, the number of records processed in the present embodiment is constant. The reason for this is that the larger N is, the greater the number of records included in the lower levels is, but even if a large number of records are included in the lower levels, they are ignored in the search of the K higher levels.

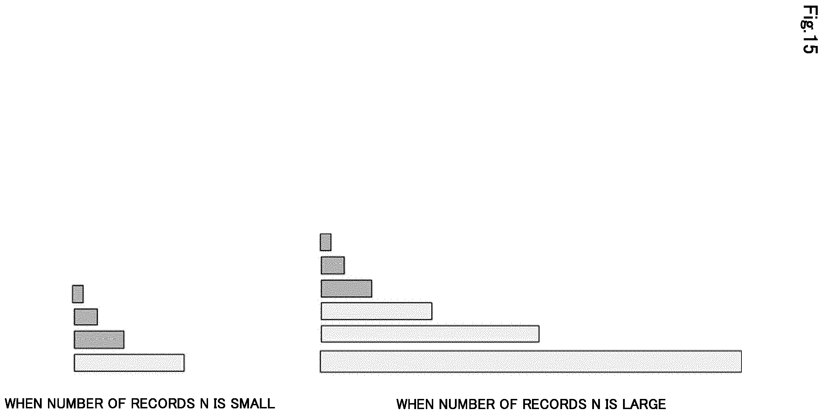

FIG. 15 is a diagram conceptually showing the number of records that are subjected to sampling processing by the information processing device in the present embodiment. As shown in FIG. 15, in the sampling according to the present embodiment, regardless of whether the number of records N is small or large, the amount of calculation does not change. In either case, sampling ends after acquiring records included in the K higher levels (K=3 in this figure).

Specifically, if a request to acquire data for 1000 people is received from the outside, regardless of whether the number of customers included in the database is 10,000 or 100,000,000, there is no change in the number of records that are subjected to sampling processing in the present embodiment.

Also, in terms of calculation speed, not only is the absolute number of records small, but also the ability to acquire multiple records all together is also important. A DBMS generally performs input and output in units of blocks, and if the records to be sampled are distributed among different blocks, acquiring a small number of records requires blocks to be repeatedly input and output, and the speed decreases.

In the present embodiment, records belonging to the same bucket are arranged near each other, thus solving this problem.

If records included in the same bucket can be acquired efficiently, what subsequently becomes a problem is the number of buckets that need to be accessed in sampling. In other words, the problem is the number of buckets that can possibly include records that satisfy the level condition when the target level of a certain target sample attribute is fixed.

If all of the sample attributes are simply divided in L=O (log N) levels, the number of buckets that need to be checked is dependent on N. Letting S be the number of sample attributes included in a certain table, the number of buckets that correspond to a certain target level of one sample attribute is L to the power of S-1 due to combinations with the S-1 other attributes. This number increases according to N.

In the present embodiment, the threshold value $\theta$ of the top bucket is set such that $\theta=L$, and therefore the number of buckets that need to be accessed in sampling can also be set so as to not be dependent on the data amount N.

For example, assume that a table includes multiple sample attributes, one of them is designated as the target sample attribute, and sampling is performed. If the highest level L-1 is set as the target level, the only buckets that correspond to this level are the top bucket and the buckets in which the levels of the other sample attributes are 0. The reason for this is that the records in which the other sample attributes are 1 or more are all included in the top bucket.

Similarly, the lower the target level is set, the higher the number of buckets that need to be considered is, but if sampling ends at an intermediate level, the number of buckets is not dependent on L, that is to say, is not dependent on the data amount N.

This advantage is achieved due to the fact that the higher the level is, the smaller the number of assigned records is. If records are simply divided evenly into levels, either the number of records belonging to one level or the number of buckets will be dependent on N, and the amount of calculation will greatly change according to the data amount.

As described above, in the present embodiment, in terms of both the number of records and the number of buckets, it is sufficient to examine only a portion of the total amount of data, and a sample that satisfies the query condition can be created at high speed even from an enormous amount of data.

Program

The program according to an embodiment of the present invention may be a program for causing a computer to execute steps A1 to A12 shown in FIG. 7. By installing this program in a computer and executing it, it is possible to realize the information processing device 100 and the information processing method of the present embodiment. In this case, a CPU (Central Processing Unit) of the computer functions as and performs the processing of the target sample attribute designation unit 11, the sample condition specification unit 12, the sampling unit 13, the input data accepting unit 14, the target table designation unit 15, the output calculation unit 16, and the database management unit 20. Also, in the present embodiment, the data storage unit 30 may be realized by a storage device such as a hard disk provided in the computer, or may be constructed in a computer other than the computer that executes the program of the present embodiment.

Also, the program of the present embodiment may be executed by a computer system constructed by multiple computers. In this case, for example, the computers may each function as any one of the target sample attribute designation unit 11, the sample condition specification unit 12, the sampling unit 13, the input data accepting unit 14, the target table designation unit 15, the output calculation unit 16, and the database management unit 20.

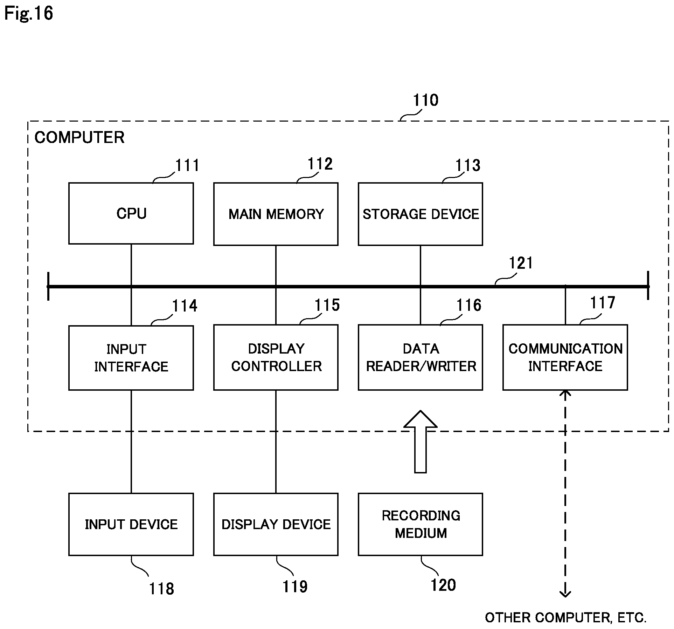

A computer that realizes the information processing device 100 by executing the program of the present embodiment will be described below with reference to FIG. 16. FIG. 16 is a block diagram showing an example of the computer that realizes the information processing device in this embodiment of the present invention.

As shown in FIG. 16, a computer 110 includes a CPU 111, a main memory 112, a storage device 113, an input interface 114, a display controller 115, a data reader/writer 116, and a communication interface 117. These elements are connected via a bus 121 so as to be able to perform data communication with each other.

The CPU 111 deploys programs (code) of the present embodiment, which are stored in the storage device 113, to the main memory 112, and carries out various types of arithmetic operations by executing the programs in a predetermined sequence. The main memory 112 is typically a volatile storage device such as a DRAM (Dynamic Random Access Memory). Also, the program of the present embodiment is provided in a state of being stored on a computer-readable recording medium 120. Note that the program of the present embodiment may be distributed over the Internet, which is accessed via the communication interface 117.

Specific examples of the storage device 113 include a hard disk drive, as well as a semiconductor storage device such as a flash memory. The input interface 114 mediates the transfer of data between the CPU 111 and an input device 118 such as a keyboard or a mouse. The display controller 115 is connected to a display device 119 and controls the display of screens by the display device 119.

The data reader/writer 116 mediates the transfer of data between the CPU 111 and the recording medium 120, reads out a program from the recording medium 120, and writes processing results obtained by the computer 110 to the recording medium 120. The communication interface 117 mediates the transfer of data between the CPU 111 and another computer.

Also, specific examples of the recording medium 120 include a general-purpose semiconductor storage device such as a CF (Compact Flash (registered trademark)) card or an SD (Secure Digital) card, a magnetic storage medium such as a flexible disk, and an optical storage medium such as a CD-ROM (Compact Disk Read Only Memory).

Note that instead of being realized by a computer in which a program is installed, the information processing device 100 of the present embodiment can also be realized by using hardware corresponding to the various units. Furthermore, a configuration is possible in which a portion of the information processing device 100 is realized by a program, and the remaining portion is realized by hardware.

Part or all of the embodiments described above can be realized by Supplementary Notes 1 to 33 described below, but the present invention is not limited to the following descriptions.

Supplementary Note 1

An information processing device for sampling data included in a database,
a sample attribute being set in one or more tables included in the database, the sample attribute being able to be designated as an attribute that indicates an element that constitutes a population, and
a hash value being calculated from a value of the sample attribute included in records included in the table in the database, and being set as a level of the sample attribute in the records,
the information processing device including:

a target sample attribute designation unit that designates the sample attribute as a target sample attribute based on input data received from outside, the target sample attribute indicating an element that constitutes a population in the sampling;
a sample condition specification unit that specifies, as a sample condition, a condition that is to be satisfied by a sample created by the sampling, based on the input data; and
a sampling unit that
selects, as a target level, a level for determining a record that is to be included in the sample, and sets a level condition with use of the selected target level, the level condition being a condition that is to be satisfied by a record that is to be included in the sample,
acquires, from among the records included in the table, a record in which the level of the target sample attribute satisfies the level condition, and includes the acquired record in the sample, and
determines whether or not the sample satisfies the sample condition, and in a case of determining that the sample condition is not satisfied, changes the target level and again acquires a record.

Supplementary Note 2

The information processing device according to Supplementary Note 1,
wherein a plurality of the sample attributes are set in the database, and
the target sample attribute designation unit designates one of the sample attributes as the target sample attribute based on the input data received from outside.

Supplementary Note 3

The information processing device according to Supplementary Note 1 or 2,
wherein the database is stored in a storage region of a storage device, and
the information processing device further includes a database management unit that determines an arrangement of the records in the storage region based on the levels of the sample attribute included in the records.

Supplementary Note 4

The information processing device according to Supplementary Note 3,
wherein a plurality of the sample attributes are set in the database,
for each record, the database management unit obtains a total of the levels of the sample attributes,
for each record in which the obtained total does not exceed a threshold value, the database management unit determines the arrangement of the record based on individual values of the levels of the sample attributes included in the record, and
for each record in which the obtained total exceeds the threshold value, the database management unit determines the arrangement based on the total.

Supplementary Note 5

The information processing device according to Supplementary Note 3 or 4,
wherein a cluster attribute indicating a record arrangement is set in the table included in the database, and
when the database management unit determines the arrangement of the records in the storage region, in a case where a plurality of records are included in the table and have the same levels of the sample attribute, the database management unit determines the arrangement of the plurality of records based on the values of the cluster attribute.

Supplementary Note 6

The information processing device according to any one of Supplementary Notes 1 to 5,
wherein in the database, the hash value that serves as the level is calculated with use of a hash function according to which a probability of outputting a large value is exponentially smaller than a probability of outputting a small value.

Supplementary Note 7

The information processing device according to any one of Supplementary Notes 1 to 6,
wherein the sampling unit sets, as the level condition, a condition that the level of the target sample attribute is higher than the target level, acquires a record in which the level of the target sample attribute is higher than the target level, and includes the acquired record in the sample.

Supplementary Note 8

The information processing device according to Supplementary Note 7,
wherein in a case of determining that the sample condition is not satisfied, the sampling unit changes the target level to a smaller value, again acquires a record, and includes the acquired record in the sample.

Supplementary Note 9

The information processing device according to any one of Supplementary Notes 1 to 6,
further including a target table designation unit that, in a case where the database includes a plurality of the tables, designates a table among the plurality of tables as a target table that is to be a target of the sampling based on the input data, the designated table including a sample attribute that is the target sample attribute,
wherein the sampling unit includes a record acquired from the target table in the sample.

Supplementary Note 10

The information processing device according to Supplementary Note 9,
wherein the target table designation unit selects, as the target table, two or more tables in which the same target sample attribute is included as the sample attribute, and
the sampling unit joins records respectively acquired from the two or more selected tables based on the same target sample attribute, includes a record generated by the joining in the sample, and determines whether or not the sample condition is satisfied.

Supplementary Note 11

The information processing device according to any one of Supplementary Notes 1 to 10,
further including an output calculation unit that calculates output with respect to the input data with use of aggregation of the records included in the sample.

Supplementary Note 12

An information processing method for sampling data included in a database, the method including:
in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

(a) a step of designating the sample attribute as a target sample attribute based on input data received from outside, the target sample attribute indicating an element that constitutes a population in the sampling;

(b) a step of specifying, as a sample condition, a condition that is to be satisfied by a sample created by the sampling, based on the input data; and

(c) a step of

selecting, as a target level, a level for determining a record that is to be included in the sample, and setting a level condition with use of the selected target level, the level condition being a condition that is to be satisfied by a record that is to be included in the sample,

acquiring, from among the records included in the table, a record in which the level of the target sample attribute satisfies the level condition, and including the acquired record in the sample, and

determining whether or not the sample satisfies the sample condition, and in a case of determining that the sample condition is not satisfied, changing the target level and again acquiring a record.

Supplementary Note 13

The information processing method according to Supplementary Note 12,
wherein a plurality of the sample attributes are set in the database, and
in step (a), one of the sample attributes is designated as the target sample attribute based on the input data received from outside.

Supplementary Note 14

The information processing method according to Supplementary Note 12 or 13,
wherein the database is stored in a storage region of a storage device, and
the method further includes (d) a step of determining an arrangement of the records in the storage region based on the levels of the sample attribute included in the records.

Supplementary Note 15

The information processing method according to Supplementary Note 14,
wherein a plurality of the sample attributes are set in the database, and in step (d),

for each record, a total of the levels of the sample attributes is obtained,
for each record in which the obtained total does not exceed a threshold value, the arrangement of the record is determined based on individual values of the levels of the sample attributes included in the record, and
for each record in which the obtained total exceeds the threshold value, the arrangement is determined based on the total.

Supplementary Note 16
The information processing method according to Supplementary Note 14 or 15,
wherein a cluster attribute indicating a record arrangement is set in the table included in the database, and
in step (d), when determining the arrangement of the records in the storage region, in a case where a plurality of records are included in the table and have the same levels of the sample attribute, the arrangement of the plurality of records is determined based on the values of the cluster attribute.

Supplementary Note 17

The information processing method according to any one of Supplementary Notes 12 to 16,
wherein in the database, the hash value that serves as the level is calculated with use of a hash function according to which a probability of outputting a large value is exponentially smaller than a probability of outputting a small value.

Supplementary Note 18

The information processing method according to any one of Supplementary Notes 12 to 17,
wherein in step (c), a condition that the level of the target sample attribute is higher than the target level is set as the level condition, a record in which the level of the target sample attribute is higher than the target level is acquired, and the acquired record is included in the sample.

Supplementary Note 19

The information processing method according to Supplementary Note 18,
wherein in step (c), in a case of determining that the sample condition is not satisfied, the target level is changed to a smaller value, a record is acquired, and the acquired record is included in the sample.

Supplementary Note 20

The information processing method according to any one of Supplementary Notes 12 to 17,
further including (e) a step of, in a case where the database includes a plurality of the tables, designating a table among the plurality of tables as a target table that is to be a target of the sampling based on the input data, the designated table including a sample attribute that is the target sample attribute,
wherein in step (c), a record acquired from the target table is included in the sample.

Supplementary Note 21

The information processing method according to Supplementary Note 20,
wherein in step (e), two or more tables in which the same target sample attribute is included as the sample attribute are selected as the target tables, and
in step (c), records respectively acquired from the two or more selected tables are joined based on the same target sample attribute, a record generated by the joining is included in the sample, and whether or not the sample condition is satisfied is determined.

Supplementary Note 22

The information processing method according to any one of Supplementary Notes 12 to 21,
further including (f) a step of calculating output with respect to the input data with use of aggregation of the records included in the sample.

Supplementary Note 23

A computer-readable recording medium having recorded thereon a program that includes instructions to be executed by a computer in order to cause the computer to sample data included in a database, the instructions causing the computer to execute:
in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

> (a) a step of designating the sample attribute as a target sample attribute based on input data received from outside, the target sample attribute indicating an element that constitutes a population in the sampling;
> (b) a step of specifying, as a sample condition, a condition that is to be satisfied by a sample created by the sampling, based on the input data; and
> (c) a step of
> selecting, as a target level, a level for determining a record that is to be included in the sample, and setting a level condition with use of the selected target level, the level condition being a condition that is to be satisfied by a record that is to be included in the sample,
> acquiring, from among the records included in the table, a record in which the level of the target sample attribute satisfies the level condition, and including the acquired record in the sample, and
> determining whether or not the sample satisfies the sample condition, and in a case of determining that the sample condition is not satisfied, changing the target level and again acquiring a record.

Supplementary Note 24

The computer-readable recording medium according to Supplementary Note 23,
wherein a plurality of the sample attributes are set in the database, and

in step (a), one of the sample attributes is designated as the target sample attribute based on the input data received from outside.

Supplementary Note 25

The computer-readable recording medium according to Supplementary Note 23 or 24,
wherein the database is stored in a storage region of a storage device, and
the program further includes instructions causing the computer to execute
(d) a step of determining an arrangement of the records in the storage region based on the levels of the sample attribute included in the records.

Supplementary Note 26

The computer-readable recording medium according to Supplementary Note 25,
wherein a plurality of the sample attributes are set in the database, and in step (d),

for each record, a total of the levels of the sample attributes is obtained,
for each record in which the obtained total does not exceed a threshold value, the arrangement of the record is determined based on individual values of the levels of the sample attributes included in the record, and
for each record in which the obtained total exceeds the threshold value, the arrangement is determined based on the total.

Supplementary Note 27

The computer-readable recording medium according to Supplementary Note 25 or 26,
wherein a cluster attribute indicating a record arrangement is set in the table included in the database, and
in step (d), when determining the arrangement of the records in the storage region, in a case where a plurality of records are included in the table and have the same levels of the sample attribute, the arrangement of the plurality of records is determined based on the values of the cluster attribute.

Supplementary Note 28

The computer-readable recording medium according to any of Supplementary Notes 23 to 27,
wherein in the database, the hash value that serves as the level is calculated with use of a hash function according to which a probability of outputting a large value is exponentially smaller than a probability of outputting a small value.

Supplementary Note 29

The computer-readable recording medium according to any of Supplementary Notes 23 to 28,
wherein in step (c), a condition that the level of the target sample attribute is higher than the target level is set as the level condition, a record in which the level of the target sample attribute is higher than the target level is acquired, and the acquired record is included in the sample.

Supplementary Note 30

The computer-readable recording medium according to Supplementary Note 29,
wherein in step (c), in a case of determining that the sample condition is not satisfied, the target level is changed to a smaller value, a record is acquired, and the acquired record is included in the sample.

Supplementary Note 31

The computer-readable recording medium according to any of Supplementary Notes 23 to 28,

wherein the program further includes instructions causing the computer to execute
(e) a step of, in a case where the database includes a plurality of the tables, designating a table among the plurality of tables as a target table that is to be a target of the sampling based on the input data, the designated table including a sample attribute that is the target sample attribute, and
in step (c), a record acquired from the target table is included in the sample.

Supplementary Note 32

The computer-readable recording medium according to Supplementary Note 31,
wherein in step (e), two or more tables in which the same target sample attribute is included as the sample attribute are selected as the target tables, and
in step (c), records respectively acquired from the two or more selected tables are joined based on the same target sample attribute, a record generated by the joining is included in the sample, and whether or not the sample condition is satisfied is determined.

Supplementary Note 33

The computer-readable recording medium according to any of Supplementary Notes 23 to 32,
wherein the program further includes instructions causing the computer to execute
(f) a step of calculating output with respect to the input data with use of aggregation of the records included in the sample.
Although the present invention has been described with reference to embodiments above, the present invention is not limited to the above embodiments. Various modifications understandable to a person skilled in the art can be made to the configuration and details of the present invention within the scope of the present invention.
This application claims priority based on Japanese Application No. 2016-021198 filed on February 5, 2016, and the entire contents thereof are hereby incorporated herein.

INDUSTRIAL APPLICABILITY

As described above, according to the present invention, sampling that matches the conditions of a query can be executed at high speed on a database in which at least one element of a population is associated with multiple records. The present invention is useful in various fields that require the creation of a sample from a large-scale database.

LIST OF REFERENCE SIGNS

| | |
|---|---|
| 10 | Processing execution unit |
| 11 | Target sample attribute designation unit |
| 12 | Sample condition specification unit |
| 13 | Sampling unit |
| 14 | Input data accepting unit |
| 15 | Target table designation unit |
| 16 | Output calculation unit |
| 20 | Database management unit |
| 30 | Database storage unit |
| 100 | Information processing device |
| 110 | Computer |
| 111 | CPU |
| 112 | Main memory |
| 113 | Storage device |
| 114 | Input interface |
| 115 | Display controller |
| 116 | Data reader/writer |
| 117 | Communication interface |
| 118 | Input device |
| 119 | Display device |
| 120 | Recording medium |
| 121 | Bus |
| 200 | Database |

**Claims**

**1.** An information processing device for sampling data included in a database,

a sample attribute being set in one or more tables included in the database, the sample attribute being able to be designated as an attribute that indicates an element that constitutes a population, and

a hash value being calculated from a value of the sample attribute included in records included in the table in the database, and being set as a level of the sample attribute in the records,

the information processing device comprising:

a target sample attribute designation unit that designates the sample attribute as a target sample attribute based on input data received from outside, the target sample attribute indicating an element that constitutes a population in the sampling;

a sample condition specification unit that specifies, as a sample condition, a condition that is to be satisfied by a sample created by the sampling, based on the input data; and

a sampling unit that

selects, as a target level, a level for determining a record that is to be included in the sample, and sets a level condition with use of the selected target level, the level condition being a condition that is to be satisfied by a record that is to be included in the sample,

acquires, from among the records included in the table, a record in which the level of the target sample attribute satisfies the level condition, and includes the acquired record in the sample, and

determines whether or not the sample satisfies the sample condition, and in a case of determining that the sample condition is not satisfied, changes the target level and again acquires a record.

2. The information processing device according to claim 1,
wherein a plurality of the sample attributes are set in the database, and
the target sample attribute designation unit designates one of the sample attributes as the target sample attribute based on the input data received from outside.

3. The information processing device according to claim 1 or 2,
wherein the database is stored in a storage region of a storage device, and
the information processing device further comprises a database management unit that determines an arrangement of the records in the storage region based on the levels of the sample attribute included in the records.

4. The information processing device according to claim 3,
wherein a plurality of the sample attributes are set in the database,
for each record, the database management unit obtains a total of the levels of the sample attributes,
for each record in which the obtained total does not exceed a threshold value, the database management unit determines the arrangement of the record based on individual values of the levels of the sample attributes included in the record, and
for each record in which the obtained total exceeds the threshold value, the database management unit determines the arrangement based on the total.

5. The information processing device according to claim 3 or 4,
wherein a cluster attribute indicating a record arrangement is set in the table included in the database, and
when the database management unit determines the arrangement of the records in the storage region, in a case where a plurality of records are included in the table and have the same levels of the sample attribute, the database management unit determines the arrangement of the plurality of records based on the values of the cluster attribute.

6. The information processing device according to any one of claims 1 to 5,
wherein in the database, the hash value that serves as the level is calculated with use of a hash function according to which a probability of outputting a large value is exponentially smaller than a probability of outputting a small value.

7. The information processing device according to any one of claims 1 to 6,
wherein the sampling unit sets, as the level condition, a condition that the level of the target sample attribute is higher than the target level, acquires a record in which the level of the target sample attribute is higher than the target level, and includes the acquired record in the sample.

8. The information processing device according to claim 7,
wherein in a case of determining that the sample condition is not satisfied, the sampling unit changes the target level to a smaller value, again acquires a record, and includes the acquired record in the sample.

9. The information processing device according to any one of claims 1 to 6,
further comprising a target table designation unit that, in a case where the database includes a plurality of the tables, designates a table among the plurality of tables as a target table that is to be a target of the sampling based on the input data, the designated table including a sample attribute that is the target sample attribute,
wherein the sampling unit includes a record acquired from the target table in the sample.

10. The information processing device according to claim 9,
wherein the target table designation unit selects, as the target table, two or more tables in which the same target sample attribute is included as the sample attribute, and
the sampling unit joins records respectively acquired from the two or more selected tables based on the same target sample attribute, includes a record generated by the joining in the sample, and determines whether or not the sample condition is satisfied.

11. The information processing device according to any one of claims 1 to 10,
further comprising an output calculation unit that calculates output with respect to the input data with use of aggregation of the records included in the sample.

12. An information processing method for sampling data included in a database, the method comprising:
in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

(a) a step of designating the sample attribute as a target sample attribute based on input data received from outside, the target sample attribute indicating an element that constitutes a population in the sampling;
(b) a step of specifying, as a sample condition, a condition that is to be satisfied by a sample created by the sampling, based on the input data; and
(c) a step of
selecting, as a target level, a level for determining a record that is to be included in the sample, and setting a level condition with use of the selected target level, the level condition being a condition that is to be satisfied by a record that is to be included in the sample,
acquiring, from among the records included in the table, a record in which the level of the target sample attribute satisfies the level condition, and including the acquired record in the sample, and
determining whether or not the sample satisfies the sample condition, and in a case of determining that the sample condition is not satisfied, changing the target level and again acquiring a record.

13. The information processing method according to claim 12,
wherein a plurality of the sample attributes are set in the database, and
in step (a), one of the sample attributes is designated as the target sample attribute based on the input data received from outside.

14. The information processing method according to claim 12 or 13,
wherein the database is stored in a storage region of a storage device, and
the method further comprises (d) a step of determining an arrangement of the records in the storage region based on the levels of the sample attribute included in the records.

15. The information processing method according to claim 14,
wherein a plurality of the sample attributes are set in the database, and
in step (d),

for each record, a total of the levels of the sample attributes is obtained,
for each record in which the obtained total does not exceed a threshold value, the arrangement of the record is determined based on individual values of the levels of the sample attributes included in the record, and
for each record in which the obtained total exceeds the threshold value, the arrangement is determined based on the total.

16. The information processing method according to claim 14 or 15,
wherein a cluster attribute indicating a record arrangement is set in the table included in the database, and

in step (d), when determining the arrangement of the records in the storage region, in a case where a plurality of records are included in the table and have the same levels of the sample attribute, the arrangement of the plurality of records is determined based on the values of the cluster attribute.

17. The information processing method according to any one of claims 12 to 16,
wherein in the database, the hash value that serves as the level is calculated with use of a hash function according to which a probability of outputting a large value is exponentially smaller than a probability of outputting a small value.

18. The information processing method according to any one of claims 12 to 17,
wherein in step (c), a condition that the level of the target sample attribute is higher than the target level is set as the level condition, a record in which the level of the target sample attribute is higher than the target level is acquired, and the acquired record is included in the sample.

19. The information processing method according to claim 18,
wherein in step (c), in a case of determining that the sample condition is not satisfied, the target level is changed to a smaller value, a record is acquired, and the acquired record is included in the sample.

20. The information processing method according to any one of claims 12 to 17,
further comprising (e) a step of, in a case where the database includes a plurality of the tables, designating a table among the plurality of tables as a target table that is to be a target of the sampling based on the input data, the designated table including a sample attribute that is the target sample attribute,
wherein in step (c), a record acquired from the target table is included in the sample.

21. The information processing method according to claim 20,
wherein in step (e), two or more tables in which the same target sample attribute is included as the sample attribute are selected as the target tables, and
in step (c), records respectively acquired from the two or more selected tables are joined based on the same target sample attribute, a record generated by the joining is included in the sample, and whether or not the sample condition is satisfied is determined.

22. The information processing method according to any one of claims 12 to 21,
further comprising (f) a step of calculating output with respect to the input data with use of aggregation of the records included in the sample.

23. A computer-readable recording medium having recorded thereon a program that includes instructions to be executed by a computer in order to cause the computer to sample data included in a database, the instructions causing the computer to execute:
in a case where, in the database, a sample attribute is set in one or more tables included in the database, the sample attribute being able to be designated as an attribute that indicates an element that constitutes a population, and a hash value is calculated from a value of the sample attribute included in the records included in the table in the database and is set as a level of the sample attribute in the records,

(a) a step of designating the sample attribute as a target sample attribute based on input data received from outside, the target sample attribute indicating an element that constitutes a population in the sampling;
(b) a step of specifying, as a sample condition, a condition that is to be satisfied by a sample created by the sampling, based on the input data; and
(c) a step of
selecting, as a target level, a level for determining a record that is to be included in the sample, and setting a level condition with use of the selected target level, the level condition being a condition that is to be satisfied by a record that is to be included in the sample,
acquiring, from among the records included in the table, a record in which the level of the target sample attribute satisfies the level condition, and including the acquired record in the sample, and
determining whether or not the sample satisfies the sample condition, and in a case of determining that the sample condition is not satisfied, changing the target level and again acquiring a record.

24. The computer-readable recording medium according to claim 23,
wherein a plurality of the sample attributes are set in the database, and
in step (a), one of the sample attributes is designated as the target sample attribute based on the input data received from outside.

**25.** The computer-readable recording medium according to claim 23 or 24,
wherein the database is stored in a storage region of a storage device, and
the program further includes instructions causing the computer to execute
(d) a step of determining an arrangement of the records in the storage region based on the levels of the sample attribute included in the records.

**26.** The computer-readable recording medium according to claim 25,
wherein a plurality of the sample attributes are set in the database, and
in step (d),

for each record, a total of the levels of the sample attributes is obtained,
for each record in which the obtained total does not exceed a threshold value, the arrangement of the record is determined based on individual values of the levels of the sample attributes included in the record, and
for each record in which the obtained total exceeds the threshold value, the arrangement is determined based on the total.

**27.** The computer-readable recording medium according to claim 25 or 26,
wherein a cluster attribute indicating a record arrangement is set in the table included in the database, and
in step (d), when determining the arrangement of the records in the storage region, in a case where a plurality of records are included in the table and have the same levels of the sample attribute, the arrangement of the plurality of records is determined based on the values of the cluster attribute.

**28.** The computer-readable recording medium according to any of claims 23 to 27,
wherein in the database, the hash value that serves as the level is calculated with use of a hash function according to which a probability of outputting a large value is exponentially smaller than a probability of outputting a small value.

**29.** The computer-readable recording medium according to any of claims 23 to 28,
wherein in step (c), a condition that the level of the target sample attribute is higher than the target level is set as the level condition, a record in which the level of the target sample attribute is higher than the target level is acquired, and the acquired record is included in the sample.

**30.** The computer-readable recording medium according to claim 29,
wherein in step (c), in a case of determining that the sample condition is not satisfied, the target level is changed to a smaller value, a record is acquired, and the acquired record is included in the sample.

**31.** The computer-readable recording medium according to any of claims 23 to 28,

wherein the program further includes instructions causing the computer to execute
(e) a step of, in a case where the database includes a plurality of the tables, designating a table among the plurality of tables as a target table that is to be a target of the sampling based on the input data, the designated table including a sample attribute that is the target sample attribute, and
in step (c), a record acquired from the target table is included in the sample.

**32.** The computer-readable recording medium according to claim 31,
wherein in step (e), two or more tables in which the same target sample attribute is included as the sample attribute are selected as the target tables, and
in step (c), records respectively acquired from the two or more selected tables are joined based on the same target sample attribute, a record generated by the joining is included in the sample, and whether or not the sample condition is satisfied is determined.

**33.** The computer-readable recording medium according to any of claims 23 to 32,
wherein the program further includes instructions causing the computer to execute
(f) a step of calculating output with respect to the input data with use of aggregation of the records included in the sample.

Fig.1

100

INFORMATION PROCESSING APPARATUS

11

TARGET SAMPLE
ATTRIBUTE
DESIGNATION UNIT

12

INPUT DATA →

SAMPLE CONDITION
SPECIFICATION UNIT

200

DATABASE

13

SAMPLING UNIT

Fig.2

Fig.3

ORDERS

| ORDERDATE | ORDERKEY* | CUSTKEY* | HOUSE-HOLDKEY* | PRICE |
|---|---|---|---|---|
| 2015-01-01 | 1 | 3 | 3 | 1000 |
| 2015-01-02 | 2 | 3 | 3 | 2000 |
| 2015-01-02 | 3 | 2 | 1 | 1000 |
| 2015-01-03 | 4 | 1 | 5 | 1000 |
| 2015-01-04 | 5 | 3 | 3 | 3000 |
| 2015-01-04 | 6 | 4 | 2 | 1000 |
| 2015-01-05 | 7 | 4 | 2 | 1000 |
| 2015-01-06 | 8 | 5 | 3 | 2000 |
| 2015-01-07 | 9 | 9 | 1 | 1000 |
| 2015-01-07 | 10 | 2 | 1 | 4000 |
| 2015-01-08 | 11 | 1 | 5 | 2000 |
| 2015-01-08 | 12 | 5 | 3 | 1000 |
| 2015-01-08 | 13 | 7 | 5 | 1000 |
| 2015-01-09 | 14 | 8 | 4 | 1000 |
| 2015-01-09 | 15 | 6 | 4 | 1000 |
| 2015-01-09 | 16 | 1 | 5 | 1000 |

CUSTOMER

| CUSTKEY* | HOUSE-HOLDKEY* | NATION |
|---|---|---|
| 1 | 5 | JAPAN |
| 2 | 1 | KOREA |
| 3 | 3 | CHINA |
| 4 | 2 | CHINA |
| 5 | 3 | JAPAN |
| 6 | 4 | JAPAN |
| 7 | 5 | KOREA |
| 8 | 4 | CHINA |
| 9 | 1 | JAPAN |
| 10 | 1 | JAPAN |

Fig.4

| SAMPLE ATTRIBUTE VALUE | LEVEL |
|---|---|
| 1,3,5,6,8,10,12,13,15 | 0 |
| 2,7,9,14,16 | 1 |
| 4,11 | 2 |

# Fig.5

ORDERS_BUCKET_0_0_0

| ORDER-DATE | ORDER-KEY | CUST-KEY | HOUSE-HOLD-KEY | PRICE |
|---|---|---|---|---|
| 2015-01-01 | 1 | 3 | 3 | 1000 |
| 2015-01-04 | 5 | 3 | 3 | 3000 |
| 2015-01-06 | 8 | 5 | 3 | 2000 |
| 2015-01-08 | 12 | 5 | 3 | 1000 |

ORDERS_BUCKET_0_0_2

| ORDER-DATE | ORDER-KEY | CUST-KEY | HOUSE-HOLD-KEY | PRICE |
|---|---|---|---|---|
| 2015-01-09 | 15 | 6 | 4 | 1000 |

ORDERS_BUCKET_0_1_0

| ORDER-DATE | ORDER-KEY | CUST-KEY | HOUSE-HOLD-KEY | PRICE |
|---|---|---|---|---|
| 2015-01-02 | 3 | 2 | 1 | 1000 |
| 2015-01-07 | 10 | 2 | 1 | 4000 |
| 2015-01-08 | 13 | 7 | 5 | 1000 |

ORDERS_BUCKET_1_0_0

| ORDER-DATE | ORDER-KEY | CUST-KEY | HOUSE-HOLD-KEY | PRICE |
|---|---|---|---|---|
| 2015-01-02 | 2 | 3 | 3 | 2000 |
| 2015-01-07 | 16 | 1 | 5 | 1000 |

ORDERS_BUCKET_1_1_0

| ORDER-DATE | ORDER-KEY | CUST-KEY | HOUSE-HOLD-KEY | PRICE |
|---|---|---|---|---|
| 2015-01-07 | 9 | 9 | 1 | 1000 |

ORDERS_BUCKET_2_0_0

| ORDER-DATE | ORDER-KEY | CUST-KEY | HOUSE-HOLD-KEY | PRICE |
|---|---|---|---|---|
| 2015-01-02 | 4 | 1 | 5 | 1000 |
| 2015-01-07 | 11 | 1 | 5 | 2000 |

ORDERS_BUCKET_TOP

| ORDER-DATE | ORDER-KEY | CUST-KEY | HOUSE-HOLD-KEY | PRICE | ORDER-KEY-LEVEL | CUST-KEY-LEVEL | HOUSE-HOLD-KEY-LEVEL |
|---|---|---|---|---|---|---|---|
| 2015-01-02 | 6 | 4 | 2 | 1000 | 0 | 2 | 1 |
| 2015-01-07 | 14 | 8 | 4 | 1000 | 1 | 0 | 2 |
| 2015-01-05 | 7 | 4 | 2 | 1000 | 1 | 2 | 1 |

Fig.6

CUSTOMER__BUCKET__0__0

| CUST-KEY | HOUSE-HOLD-KEY | NATION |
|---|---|---|
| 1 | 5 | JAPAN |
| 3 | 3 | CHINA |
| 5 | 3 | JAPAN |
| 10 | 1 | JAPAN |

CUSTOMER__BUCKET__TOP

| CUST-KEY | HOUSE-HOLD-KEY | NATION | CUST-KEY-LEVEL | HOUSE-HOLD-KEY-LEVEL |
|---|---|---|---|---|
| 4 | 2 | CHINA | 2 | 1 |

CUSTOMER__BUCKET__0__2

| CUST-KEY | HOUSE-HOLD-KEY | NATION |
|---|---|---|
| 6 | 4 | JAPAN |
| 8 | 4 | CHINA |

CUSTOMER__BUCKET__1__0

| CUST-KEY | HOUSE-HOLD-KEY | NATION |
|---|---|---|
| 2 | 1 | KOREA |
| 7 | 5 | KOREA |
| 9 | 1 | JAPAN |

Fig.7

```
        ┌─────────────┐
        │    Start    │
        └─────────────┘
               │
               ▼
   ┌──────────────────────┐    A1
   │ ACCEPT INPUT DATA FROM│
   │       OUTSIDE         │
   └──────────────────────┘
               │
               ▼
   ┌──────────────────────┐    A2
   │ DESIGNATE TARGET SAMPLE│
   │       ATTRIBUTE        │
   └──────────────────────┘
               │
               ▼
   ┌──────────────────────┐    A3
   │ DESIGNATE TARGET TABLE │
   └──────────────────────┘
               │
               ▼
   ┌──────────────────────┐    A4
   │ SPECIFY SAMPLE CONDITION│
   └──────────────────────┘
               │
               ▼
   ┌──────────────────────┐    A5
   │ INITIALIZE TARGET LEVEL │
   └──────────────────────┘
               │
               ▼
   ┌──────────────────────┐    A6              A10
   │ GENERATE SAMPLE CONDITION│      ┌──────────────────────┐
   │ QUERY USING RECORDS THAT │◄─────│  LOWER TARGET LEVEL   │
   │ SATISFY LEVEL CONDITION  │      └──────────────────────┘
   └──────────────────────┘                    ▲
               │                                │ No
               ▼                                │
   ┌──────────────────────┐    A7               │
   │ EXECUTE SAMPLE CONDITION│                  │
   │        QUERY           │                   │
   └──────────────────────┘                     │
               │            A8          A9      │
               ▼                                │
         ╱─────────────╲   No  ╱─────────────────╲
        ╱  SATISFIES    ╲─────▶╱  TARGET LEVEL IS 0? ╲
        ╲  SAMPLE        ╱      ╲                   ╱
         ╲ CONDITION?   ╱        ╲─────────────────╱
          ╲───────────╱                  │ Yes
               │ Yes                      │
               ▼                          │
   ┌──────────────────────┐    A11        │
   │ CALCULATE OUTPUT CONTENT│◄───────────┘
   │     USING SAMPLE        │
   └──────────────────────┘
               │
               ▼
   ┌──────────────────────┐    A12
   │  OUTPUT CALCULATED     │
   │   OUTPUT CONTENT       │
   └──────────────────────┘
               │
               ▼
        ┌─────────────┐
        │     End     │
        └─────────────┘
```

Fig.8

```
SAMPLE orders AS orders_sample, customer AS customer_sample BY custkey
WITH joined_table AS
    (SELECT
        *
     FROM
        orders_sample JOIN customer_sample USING(custkey)
     WHERE
        orderdate BETWEEN '2015-01-02' AND '2015-01-08'
        AND nation = "JAPAN")
UNTIL
        1000 <= (SELECT COUNT(DISTINCT custkey) FROM joined_table)
SELECT
    AVG(sum)
  FROM
    (SELECT
        SUM(price)
     FROM
        joined_table
     GROUP BY
        custkey);
```

Fig.9

```
CREATE VIEW orders_sample AS
SELECT * FROM orders_bucket_top
UNION
SELECT * FROM orders_bucket_0_2_0
UNION
SELECT * FROM orders_bucket_1_1_0
UNION
SELECT * FROM orders_bucket_0_1_1
UNION
SELECT * FROM orders_bucket_0_1_0;
```

Fig.10

```
CREATE VIEW orders_bucket_top AS
SELECT
    *
  FROM
    orders_bucket_top
  WHERE
    custkeylevel >= 1;
```

Fig.11

```
CREATE VIEW customer_sample AS
SELECT * FROM customer_bucket_top
UNION
SELECT * FROM customer_bucket_2_0
UNION
SELECT * FROM customer_bucket_1_1
UNION
SELECT * FROM customer_bucket_1_0;
```

Fig.12

```
CREATE VIEW customer_bucket_top AS
SELECT
    *
  FROM
    customer_bucket_top
  WHERE
    custkeylevel >= 1;
```

Fig.13

```
WITH joined_table AS
    (SELECT
        *
     FROM
        orders_sample JOIN customer_sample USING(custkey)
     WHERE
        orderdate BETWEEN '2015-01-02' AND '2015-01-08'
        AND nation = "JAPAN")
SELECT
        1000 <= (SELECT COUNT(DISTINCT custkey) FROM joined_table);
```

Fig.14

```
WITH joined_table AS
    (SELECT
        *
     FROM
        orders_sample JOIN customer_sample USING(custkey)
     WHERE
        orderdate BETWEEN '2015-01-02' AND '2015-01-08'
        AND nation = "JAPAN")
SELECT
    AVG(sum)
  FROM
    (SELECT
        SUM(price)
     FROM
        joined_table
     GROUP BY
       custkey);
```

Fig.15

WHEN NUMBER OF RECORDS N IS LARGE

WHEN NUMBER OF RECORDS N IS SMALL

Fig.16

COMPUTER 110

CPU 111

MAIN MEMORY 112

STORAGE DEVICE 113

121

INPUT INTERFACE 114

DISPLAY CONTROLLER 115

DATA READER/WRITER 116

COMMUNICATION INTERFACE 117

INPUT DEVICE 118

DISPLAY DEVICE 119

RECORDING MEDIUM 120

OTHER COMPUTER, ETC.

## INTERNATIONAL SEARCH REPORT

| International application No. |
| --- |
| PCT/JP2017/003474 |

| A. CLASSIFICATION OF SUBJECT MATTER |
| --- |
| *G06F12/00*(2006.01)i |

According to International Patent Classification (IPC) or to both national classification and IPC

| B. FIELDS SEARCHED |
| --- |

Minimum documentation searched (classification system followed by classification symbols)
G06F12/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2014-13479 A  (Sony Corp.),<br>23 January 2014 (23.01.2014),<br>abstract<br>& US 2014/0012862 A1    & CN 103530305 A | 1-33 |
| A | JP 11-238073 A  (Mitsubishi Electric Corp.),<br>31 August 1999 (31.08.1999),<br>claims<br>(Family: none) | 1-33 |

☐ Further documents are listed in the continuation of Box C.     ☐ See patent family annex.

| |
| --- |
| * Special categories of cited documents: |
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| |
| --- |
| "T" later document published after the international filing date or priority date and not in conflict with the application but cited to understand the principle or theory underlying the invention |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
| --- | --- |
| 14 April 2017 (14.04.17) | 25 April 2017 (25.04.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7047230 B

- JP 2016021198 A